(19) Europäisches Patentamt
European Patent Office
Office européen des brevets

(11) Veröffentlichungsnummer : **0 410 221 B1**

# (12) EUROPÄISCHE PATENTSCHRIFT

(45) Veröffentlichungstag der Patentschrift : **10.06.92 Patentblatt 92/24**

(21) Anmeldenummer : **90113347.0**

(22) Anmeldetag : **12.07.90**

(51) Int. Cl.$^5$ : **C08L 69/00,** C08K 5/521, C08L 67/02, C08L 25/12, C08L 55/02, C08L 27/18, C08G 64/06, // (C08L69/00, C08K5:521, C08L55:02, 27:18), (C08L69/00, C08K5:521), (C08L69/00, C08K5:521, C08L67:02, 55:02, 27:18), (C08L69/00, C08K5:521, C08L25:12, 55:02, 27:18)

## (54) Flammwidrige Mischungen.

(30) Priorität : **25.07.89 DE 3924493**

(43) Veröffentlichungstag der Anmeldung : **30.01.91 Patentblatt 91/05**

(45) Bekanntmachung des Hinweises auf die Patenterteilung : **10.06.92 Patentblatt 92/24**

(84) Benannte Vertragsstaaten : **DE ES FR GB IT NL**

(56) Entgegenhaltungen :
**EP-A- 0 103 230**
**EP-A- 0 206 058**
**EP-A- 0 226 922**
**EP-A- 0 305 816**
**EP-A- 0 320 836**
**EP-A- 0 359 953**
**EP-A- 0 362 646**
**US-A- 4 368 315**

(73) Patentinhaber : **BAYER AG**
**W-5090 Leverkusen 1 Bayerwerk (DE)**

(72) Erfinder : **Wittman, Dieter, Dr.**
**Wolfskaul 4**
**W-5000 Köln 80 (DE)**
Erfinder : **Freitag, Dieter, Dr.**
**Hasenheide 10**
**W-4150 Krefeld (DE)**
Erfinder : **Westeppe, Uwe, Dr.**
**Vogelskamp 72**
**W-4020 Mettmann (DE)**
Erfinder : **Eckel, Thomas, Dr.**
**Gneisenaustrasse 15a**
**W-4047 Dormagen 1 (DE)**
Erfinder : **Ott, Karl-Heinz, Dr.**
**Paul-Klee-Strasse 54**
**W-5090 Leverkusen 1 (DE)**

EP 0 410 221 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung der nicht vorveröffentlichten deutschen Patentanmeldung P 3 832 396.6 sind Dihydroxydiphenylcycloalkane der Formel (I)

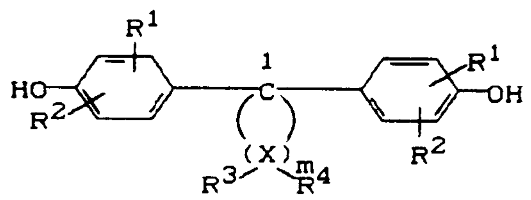

(I),

worin
$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,
m eine ganze Zahl von 4 bis 7, bevorzugt 4 oder 5,
$R^3$ und $R^4$, für jedes X individuell wählbar, unabhängig voneinander Wasserstoff oder $C_1$-$C_6$-Alkyl
und
X Kohlenstoff bedeuten,
mit der Maßgabe, daß an mindestens einem Atom X $R^3$ und $R^4$ gleichzeitig Alkyl bedeuten.

Bevorzugt sind an 1 - 2 Atomen X, insbesondere nur an einem Atom X, $R^3$ und $R^4$ gleichzeitig Alkyl. Bevorzugter Alkylrest ist Methyl; die X-Atome in α-Stellung zu dem di-phenyl-substituierten C-Atom (C-1) sind bevorzugt nicht dialkylsubstituiert, dagegen ist die Alkyl-disubstitution in ß-Stellung zu C-1 bevorzugt.

Insbesondere sind Gegenstand der Erfindung von P 3 832 396.6 Dihydroxydiphenylcycloalkane mit 5 und 6 Ring-C-Atomen im cycloaliphatischen Rest (m = 4 oder 5 in Formel (I) wie beispielsweise die Diphenole der Formeln

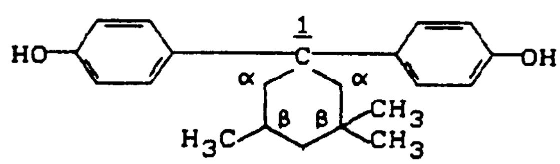

(II)

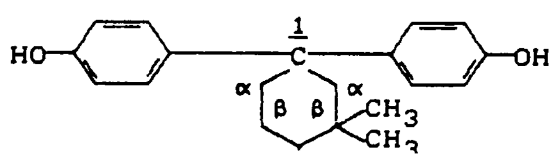

(III)

und

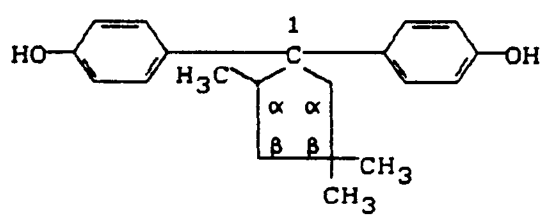

(IV),

wobei das 1,1-Bis-(4-hydroxyphenyl)-3.3.5-trimethylcyclohexan (Formel II) besonders bevorzugt ist.

Die Dihydroxydiphenylcycloalkane der Formel (I) können in an sich bekannter Weise durch Kondensation von Phenolen der Formel (V)

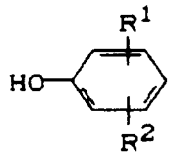

(V)

und Ketonen der Formel (VI)

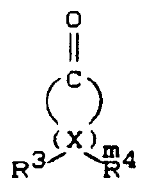

(VI)

hergestellt werden, wobei in den Formeln (V) und (VI) X, $R^1$, $R^2$, $R^3$, $R^4$ und m die für Formel (I) angegebene Bedeutung haben.

Die Phenole der Formel (V) sind entweder literaturbekannt oder nach literaturbekannten Verfahren erhältlich (siehe beispielsweise für Kresole und Xylenole, Ullmanns Encyklopädie der technischen Chemie 4. neubearbeitete und erweiterte Auflage Band 15, Seiten 61 - 77, Verlag Chemie-Weinheim-New York 1978; für Chlorphenole, Ullmanns Encyklopädie der technischen Chemie, 4. Auflage, Verlag Chemie, 1975, Band 9, Seiten 573-582; und für Alkylphenole, Ullmanns Encyklopädie der technischen Chemie, 4. Auflage, Verlag Chemie 1979, Band 18, Seiten 191-214).

Beispiele für geeignete Phenole der Formel (V) sind: Phenol, o-Kresol, m-Kresol, 2,6-Dimethylphenol, 2-Chlorphenol, 3-Chlorphenol, 2,6-Dichlorphenol, 2-Cyclohexylphenol, Diphenylphenol und o,- oder p-Benzylphenole.

Die Ketone der Formel (VI) sind literaturbekannt (siehe beispielsweise Beilsteins Handbuch der Organischen Chemie, 7. Band, 4. Auflage, Springer-Verlag, Berlin, 1925 und die entsprechenden Ergänzungsbände 1 bis 4, und J. Am. Chem. Soc. Vol 79 (1957), Seiten 1488, 1490 und 1491, US-PS 2 692 289, Allen et al., J. Chem. Soc., (1954), 2186, 2191 und J. Org. Chem. Vol. 38, No. 26, (1973), Seiten 4431 ff, J. Am. Chem. Soc. 87, (1965), Seite 1353 ff, insbesondere Seite 1355). Ein allgemeines Verfahren zur Herstellung von Ketonen der Formel (VI) ist beispielsweise in "Organikum, 15. Auflage, 1977, VEB-Deutscher Verlag der Wissenschaften, Berlin, beispielsweise Seite 698. beschrieben.

Beispiele für bekannte Ketone der Formel (VI) sind:
3,3-Dimethylcyclopentanon, 2,2-Dimethylcyclohexanon, 3,3-Dimethylcyclohexanon, 4,4-Dimethylcyclohexanon, 3-Ethyl-3-Methylcyclopentanon, 2,3,3-Trimethylcyclopentanon, 2,4,4-Trimethylcyclopentanon, 3,3,4-Trimethylcyclopentanon, 3,3-Dimethylcycloheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 2,5,5-Trimethylcyclohexanon, 3,3,5-Trimethylcyclohexanon, 3,4,4-Trimethylcyclohexanon, 2,3,3,4-Tetramethylcyclopentanon, 2,3,4,4-Tetramethylcyclopentanon, 3,3,4,4-Tetramethylcyclopentanon, 2,2,5-Trimethylcycloheptanon, 2,2,6-Trimethylcycloheptanon, 2,6,6-Trimethylcycloheptanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 2-Isopropyl-4,4-dimethylcyclopentanon, 4-Isopropyl-2,4-dimethylcyclopentanon, 2-Ethyl-3,5,5-trimethylcyclohexanon, 3-Ethyl-3,5,5-trimethylcyclohexanon, 3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 3-Isopropyl-3,5,5-trimethylcyclohexanon, 4-Isopropyl-3,5,5-trimethylcyclohexanon, 3,3,5-Trimethyl-5-propylcyclohexanon, 3,5,5-Trimethyl-5-propylcyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 5-Ethyl-2,4-diisopropyl-5-methylcyclohexanon, 2,2-Dimethylcyclooctanon, und 3,3,8-Trimethylcyclooctanon.

Beispiele für bevorzugte Ketone sind

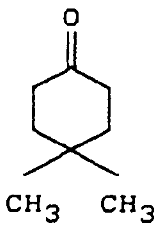

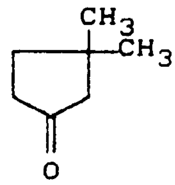

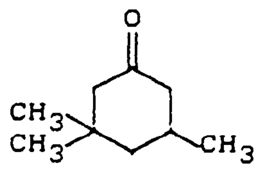

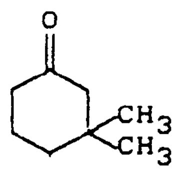

und

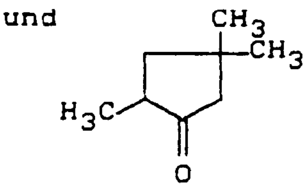

Zur Bisphenolherstellung werden im allgemeinen 2 bis 10 Mol, vorzugsweise 2,5 bis 6 Mol Phenol (V) pro Mol Keton (VI), verwendet. Bevorzugte Reaktionszeiten betragen 1 bis 100 Stunden. Im allgemeinen arbeitet man bei Temperaturen von -30°C bis 300°C, vorzugsweise von -15°C bis 150°C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie $C_1$-$C_{18}$-Alkyl-Mercaptanen, Schwefelwasserstoff, Thiophenolen, Thiosäuren und Dialkylsulfiden beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen, letzteres ist jedoch zur Erzielung guter Umsätze in jedem Fall dann vorteilhaft, wenn der eingesetzte Katalysator das Reaktionswasser nicht bindet.

Geeignete wasserentziehende Mittel sind beispielsweise Acetanhydrid, Zeolithe, Polyphosphorsäure und Phosphorpentoxid.

Gegenstand der Erfindung der deutschen Patentanmeldung P 3 832 396.6 ist somit außerdem ein Verfahren zur Herstellung der Dihydroxydiphenylcycloalkane der Formel (I)

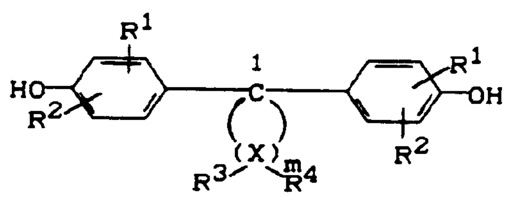

(I),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5, sind,

$R^3$ und $R^4$, für jedes X individuell wählbar, unabhängig voneinander Wasserstoff oder $C_1$-$C_6$-Alkyl

und

X Kohlenstoff ist

mit der Maßgabe, daß an mindestens einem Atom X $R^3$ und $R^4$ gleichzeitig Alkyl bedeuten,

das dadurch gekennzeichnet ist, daß man Phenole der Formel (V)

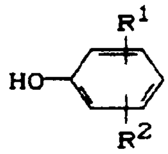

(V)

worin
$R^1$ und $R^2$ die für Formel (I) angegebene Bedeutung haben, mit Ketonen der Formel (VI)

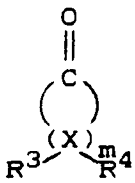

(VI)

worin
X, m, $R^3$ und $R^4$ die für Formel (I) angegebene Bedeutung haben, im Molverhältnis (V) : (VI) zwischen 2:1 und 10:1, vorzugsweise zwischen 2,5:1 und 6:1 bei Temperaturen zwischen -30°C und 300°C, vorzugsweise zwischen -15°C und 150°C und bei Drücken von 1 bis 20 bar, vorzugsweise von 1 bis 10 bar in Anwesenheit saurer Katalysatoren und gegebenenfalls in Anwesenheit von Co-Katalysatoren und/oder Lösungsmitteln und/oder wasserentziehenden Mitteln umsetzt.

Bevorzugt sind in Formel (I) an 1 - 2 Atomen X, insbesondere nur an einem Atom X, $R^3$ und $R^4$ gleichzeitig Alkyl. Bevorzugter Alkylrest ist Methyl; ebenfalls verwendbar sind Ethyl oder $C_3$-$C_6$-Alkylreste, die geradkettig oder verzweigt sein können. Die X-Atome in α-Stellung zu dem di-phenylsubstituierten C-Atom (C-1) sind bevorzugt nicht dialkylsubstituiert, dagegen ist die Disubstitution mit Alkyl in ß-Stellung in C-1 bevorzugt.

In manchen Fällen verläuft die Reaktion nicht ganz einheitlich, d.h. es können mehrere, unterschiedliche Produkte entstehen, so daß die gewünschte Verbindung zunächst aus einem Gemisch isoliert werden muß. Für Einzelheiten der Kondensation sei auf Schnell, Chemistry und Physics of Polycarbonates, Interscience Publishers, New York 1964 verwiesen. Manchmal kann die Reaktion durch Wahl entsprechender Katalysatoren und Reaktionsbedingungen so gesteuert werden, daß die gewünschte Verbindung ausfällt oder auskristallisiert, was deren Isolierung erleichtert.

Beispiel A

Herstellung des Diphenols (II)

In einem 1 l-Rundkolben mit Rührer, Tropftrichter, Thermometer, Rückflußkühler und Gaseinleitungsrohr werden 7,5 Mol (705 g) Phenol und 0,15 Mol (30,3 g) Dodecylthiol vorgelegt und bei 28 bis 30°C mit trockenem HCl-Gas gesättigt. Zu dieser Lösung werden innerhalb von 3 Stunden eine Lösung von 1,5 Mol (210 g) Dihydroisophoron (3,3,5-Trimethyl-cyclohexan-1-on) und 1,5 Mol (151 g) Phenol zugetropft, wobei weiterhin HCl-Gas durch die Reaktionslösung zugeleitet wird. Nach beendeter Zugabe leitet man für weitere 5 Stunden HCl-Gas ein. Man läßt 8 h bei Zimmertemperatur nachreagieren. Anschließend wird das überschüssige Phenol durch Wasserdampfdestillation entfernt. Der verbleibende Rückstand wird zweimal mit Petrolether (60-90) und einmal mit Methylenchlorid heiß extrahiert und abfiltriert.
Ausbeute: 370 g
Schmelzpunkt: 205 bis 207°C

Die Diphenole der Formel (I) sind insbesondere geeignet zur Herstellung von hochmolekularen, thermoplastischen Polycarbonaten, die sich durch hohe Wärmeformbeständigkeit in Kombination mit einem guten sonstigen Eigenschaftsbild auszeichnen.

Gegenstand der Erfindung der deutschen Patentanmeldung P 3 832 396.6 ist somit auch die Verwendung der Diphenole der Formel (I) zur Herstellung von hochmolekularen thermoplastischen, aromatischen Polycarbonaten.

Es können sowohl ein Diphenol der Formel (I) unter Bildung von Homopolycarbonaten als auch mehrere Diphenole der Formel (I) unter Bildung von Copolycarbonaten verwendet werden.

Außerdem können die Diphenole der Formel (I) auch im Gemisch mit anderen Diphenolen, beispielsweise mit denen der Formel HO-Z-OH (VII), zur Herstellung von hochmolekularen, thermoplastischen, aromatischen Polycarbonaten verwendet werden.

Geeignete andere Diphenole der Formel HO-Z-OH (VII) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (I) oder Heteroatome als Brückenglieder enthalten kann.

Beispiele für Diphenole der Formel (VII) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 956, der französischen Patentschrift 1 561 518 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (VII) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Das molare Verhältnis von erfindungsgemäß zu verwendenden Diphenolen der Formel (I) zu den gegebenenfalls mitzuverwendenden anderen Diphenolen, beispielsweise denen der Formel (VII), soll zwischen 100 Mol-% (I) zu 0 Mol-% anderem Diphenol und 2 Mol-% (I) zu 98 Mol-% anderem Diphenol, vorzugsweise zwischen 100 Mol% (I) zu 0 Mol% anderem Diphenol und 5 Mol% (I) zu 95 Mol% anderem Diphenol und insbesondere zwischen 100 Mol%(I) zu 0 Mol% anderem Diphenol und 10 Mol% (I) zu 90 Mol% anderem Diphenol und 10 Mol% (I) zu 90 Mol% anderem Diphenol und ganz besonders zwischen 100 Mol% (I) zu 0 Mol% anderem Diphenol und 20 Mol% (I) zu 80 Mol% anderem Diphenol liegen.

Die hochmolekularen Polycarbonate aus den Diphenolen der Formel (I), gegebenenfalls in Kombination mit anderen Diphenolen können nach den bekannten Polycarbonatherstellungsverfahren hergestellt werden. Dabei können die verschiedenen Diphenole sowohl statistisch als auch blockweise miteinander verknüpft sein.

Gegenstand der Erfindung der deutschen Patentanmeldung P 3 832 396.6 ist somit auch ein Verfahren zur Herstellung von hochmolekularen thermoplastischen, aromatischen Polycarbonaten aus Diphenolen, gegebenenfalls Kettenabbrechern und gegebenenfalls Verzweigern nach den bekannten Methoden der Polycarbonatherstellung, vorzugsweise nach dem Zweiphasengrenzflächenverfahren, das dadurch gekennzeichnet ist, daß man als Diphenole solche der Formel (I) in Mengen von 100 Mol-% bis 2 Mol-%, vorzugsweise in Mengen von 100 Mol-% bis 5 Mol-% und insbesondere in Mengen von 100 Mol-% bis 10 Mol-%, und ganz besonders 100 Mol-% bis 20 Mol-%, bezogen jeweils auf die Gesamtmolmenge an eingesetzten Diphenolen, verwendet.

Als Verzweiger dienen, falls benutzt, in bekannter Weise geringe Mengen, vorzugsweise Mengen zwischen 0,05 und 2,0 Mol% (bezogen auf eingesetzte Diphenole), an drei- oder mehr als dreifunktionellen Verbindungen, insbesondere solchen mit drei oder mehr als drei phenolischen Hydroxylgruppen, um verzweigte Polycarbonate zu erhalten. Einige der verwendbaren Verbindungen mit drei oder mehr als drei phenolischen Hydroxylgruppen sind
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5′-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan
und
1,4-Bis-((4′-,4″-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur Regelung des Molekulargewichts dienen in bekannter Weise monofunktionelle Verbindungen in üblichen Konzentrationen. Geeignete Verbindungen sind z.B. Phenol, tert.-Butylphenole oder andere Alkyl-$C_1$-$C_7$ substituierte Phenole. Zur Regelung des Molekulargewichts sind insbesondere kleine Mengen Phenole der Formel (VIII) geeignet

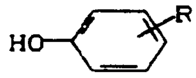

(VIII)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonate von P 3 832 396.6 können vorzugsweise nach dem Phasengrenzflächenverfahren (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole der Formel (I) in wäßrig alkalischer Phase gelöst. Zur Herstellung von Co-Polycarbonaten mit anderen Diphenolen werden Gemische von Diphenolen der Formel (I) und den anderen Diphenolen, beispielsweise denen der Formel (VII), eingesetzt. Zur Regulierung des Molekulargewichtes können Kettenabbrecher z.B. der Formel (VIII) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitzuverwendenden 0,05 bis 2 Mol-% an Verzweigern können entweder mit den Diphenolen in der wäßrig alkalischen Phase vorgelegt werden oder in dem organischen Lösungsmittel gelöst vor der Phosgenierung zugegeben werden.

Neben den einzusetzenden Diphenolen der Formel (I) sowie den anderen Diphenolen (VII) können auch

deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach Molen Diphenolat-Struktureinheiten von (I) und gegebenenfalls von den anderen Di-phenolen wie beispielsweise von (VII); ebenso kann bei Einsatz von Chlorkohlensäureestern die Phosgenmenge in bekannter Weise entsprechend reduziert werden.

Geeignete organische Lösungsmittel für die Lösung der Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Losung.

Die Herstellung der Polycarbonate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden.

Die Isolierung der Polycarbonate erfolgt in bekannter Weise.

Die hochmolekularen, thermoplastischen, aromatischen Polycarbonate können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden. Auch hier werden die erfindungsgemäßen Polycarbonate in bekannter Weise isoliert.

Die nach dem Verfahren der deutschen Patentanmeldung P 3 832 396.6 erhältlichen Polycarbonate haben bevorzugt Molekulargewichte $\overline{M}w$ (Gewichtsmittel, ermittelt durch Gelchromatographie nach vorheriger Eichung) von mindestens 10 000, besonders bevorzugt von 10 000 bis 200 000 und insbesondere von 20 000 bis 80 000. Sie können linear oder verzweigt sein, sie sind Homopolycarbonate oder Copolycarbonate auf Basis der Diphenole der Formel (I).

Gegenstand der Erfindung der deutschen Patentanmeldung P 3 832 396.6 sind somit auch hochmolekulare thermoplastische, aromatische Polycarbonate mit $\overline{M}w$ (Gewichtsmittelmolekulargewichten) von mindestens 10 000, vorzugsweise von 10 000 bis 200 000 und insbesondere von 20 000 bis 80 000, erhältlich aus Diphenolen der Formel (I), die linear oder verzweigt sind.

Gegenstand der Erfindung der deutschen Patentanmeldung P 3 832 396.6 sind somit auch hochmolekulare, thermoplastische, aromatische Polycarbonate mit $\overline{M}w$ (Gewichtsmittelmolekulargewichten) von mindestens 10 000, vorzugsweise von 10 000 bis 200 000 und insbesondere von 20 000 bis 80 000, die bifunktionelle Carbonatstruktureinheiten der Formel (Ia)

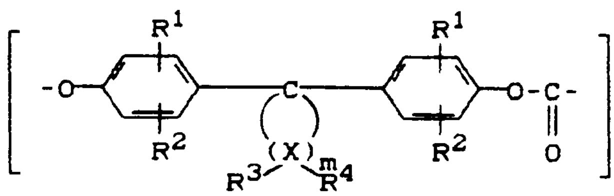

(Ia)

worin
X, $R^1$, $R^2$, $R^3$, $R^4$ und m die für die Formel (I) genannte Bedeutung haben,
in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders 100 Mol-% bis 20 Mol-%, bezogen jeweils auf die Gesamtmenge von 100 Mol-% an difunktionellen Carbonatstruktureinheiten im Polycarbonat enthalten.

Die Polycarbonate enthalten somit jeweils zu 100 Mol-% komplementäre Mengen an anderen difunktionellen Carbonatstuktureinheiten, beispielsweise solchen der Formel (VIIa)

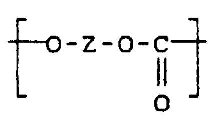

(VIIa),

also in Mengen von 0 Mol-% (einschließlich) bis 98 Mol-% einschließlich, vorzugsweise von 0 Mol-% bis 95

Mol-% und insbesondere von 0 Mol-% bis 90 Mol-% und ganz besonders bevorzugt 0 Mol-% bis 80 Mol-%, bezogen jeweils auf die Gesamtmenge von 100 Mol-% an difunktionellen Carbonatstruktureinheiten im Polycarbonat.

Polycarbonate auf Basis von cycloaliphatischen Bisphenolen sind grundsätzlich bekannt und z.B. in EP-0 164 476, DE-OS 33 45 945, DE-OS 20 63 052, FR 14 27 998, WP 80 00 348, BE 785 189 beschrieben. Sie haben häufig relativ hohe Einfriertemperaturen, aber andere, wichtige physikalische Eigenschaften wie UV- und Wärmealterungsstabilität sind unzureichend.

Es hat sich nun überraschenderweise gezeigt, daß wie bereits erwähnt durch den Einbau der Diphenole der Formel (I) neue Polycarbonate mit hoher Wärmeformbeständigkeit erhalten werden, die auch sonst ein gutes Eigenschaftsbild haben. Dies gilt insbesondere für die Polycarbonate auf Basis der Diphenole (I), in denen "m" 4 oder 5 ist, und ganz besonders für die Polycarbonate auf Basis der Diphenole (Ib)

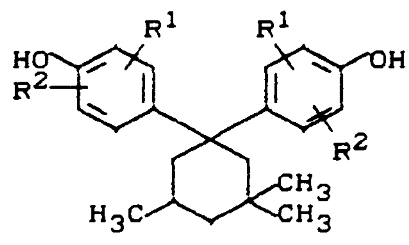

(Ib),

worin

$R^1$ und $R^2$ unabhängig voneinander die für Formel (I) genannte Bedeutung haben und besonders bevorzugt Wasserstoff sind.

Somit sind Gegenstand der Erfindung der deutschen Patentanmeldung P 3 832 396.6 vorzugsweise Polycarbonate, in denen die Struktureinheiten der Formel (Ia) eingeschränkt sind auf m = 4 oder 5 und ganz besonders solche der Formel (Ic) sind

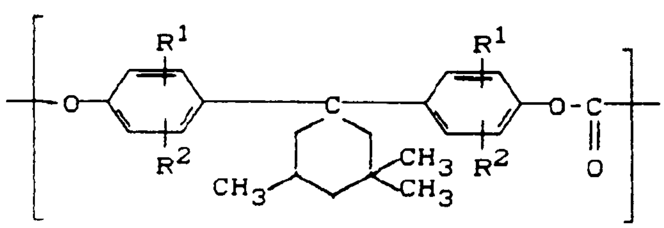

(Ic)

worin

$R^1$ und $R^2$ die für Formel (Ia) genannte Bedeutung haben, besonders bevorzugt aber Wasserstoff sind.

Diese Polycarbonate auf Basis der Diphenole der Formel (Ib), worin insbesondere $R^1$ und $R^2$ Wasserstoff sind, besitzen zur hohen Wärmeformbeständigkeit außerdem eine gute UV-Stabilität und ein gutes Fließverhalten in der Schmelze, was nicht zu erwarten war.

Durch die beliebige Kombination mit anderen Diphenolen, insbesondere mit denen der Formel (VII) lassen sich zudem die Polycarbonateigenschaften in günstiger Weise variieren.

Die Isolierung der nach dem Verfahren der deutschen Patentanmeldung P 3 832 396.6 erhältlichen Polycarbonate geschieht in bekannter Weise, indem man die bei Phasengrenzflächenverfahren erhaltene organische Phase abtrennt, neutral und elektrolytfrei wäscht und dann beispielsweise über einen Eindampfextruder als Granulat isoliert.

Den Polycarbonaten der deutschen Patentanmeldung P 3 832 396.6 können noch vor oder nach ihrer Verarbeitung die für thermoplastische Polycarbonate üblichen Additive wie Stabilisatoren, Entformungsmittel, Pigmente, Flammschutzmittel, Antistatika, Füllstoffe und Verstärkungsstoffe in den üblichen Mengen zugesetzt werden.

Im einzelnen können beispielsweise Ruß, Kieselgur, Kaolin, Tone, $CaF_2$, $CaCO_3$, Aluminiumoxide, Glasfasern und anorganische Pigmente sowohl als Füllstoffe als auch als Nucleierungsmittel zugesetzt werden, sowie als Entformungsmittel beispielsweise Glycerinstearate, Pentaerythrittetrastearat und Trimethylolpropantristearat.

Die Polycarbonate können zu Formkörpern verarbeitet werden, indem man beispielsweise die in bekannter

Weise isolierten Polycarbonate zu Granulat extrudiert und dieses Granulat gegebenenfalls nach Zusatz der obengenannten Additive durch Spritzguß zu verschiedenen Artikeln in bekannter Weise verarbeitet.

Die Polycarbonate sind als Formkörper überall dort einsetzbar, wo die bislang bekannten Polycarbonate eingesetzt wurden, also im Elektrosektor sowie im Bausektor für Abdeckungen und Verglasungen, und zwar dann, wenn erhöhte Wärmeformbeständigkeit bei gleichzeitig guter Verarbeitbarkeit, also wenn komplizierte Bauteile hoher Wärmeformbeständigkeit verlangt werden.

In den nachfolgenden Beispielen B.1 bis B.5 wird die relative Viskosität gemessen an 0,5 Gew.-%igen Lösung des Polycarbonats in $CH_2Cl_2$.

Die Einfriertemperatur oder Glastemperatur wird gemessen durch Differential Scanning Calorimetry (DSC).

Beispiel B.1

30,94 g (0,1 Mol) des Diphenols (II), 33,6 g (0,6 Mol) KOH und 560 g Wasser werden in einer Inertgas-Atmosphäre unter Rühren gelöst. Dann fügt man eine Lösung von 0,188 g (2 Mol-%) Phenol in 560 g Methylenchlorid zu. In die gut gerührte Lösung wurden bei pH 13 bis 14 und 21 bis 25°C 19,8 g (0,2 Mol) Phosgen eingeleitet. Danach wird 0,1 ml Ethylpyridin zugegeben und noch 45 Minuten gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,259.

Die Glastemperatur des Polymers wurde zu 233°C bestimmt (DSC).

Beispiel B.2

68,4 g (0,3 Mol) Bisphenol A (2,2-Bis-(4-hydroxyphenyl)-propan, 217,0 g (0,7 Mol) Diphenol (II), 336,6 g (6 Mol) KOH und 2700 g Wasser werden in einer Inertgas-Atmosphäre unter Rühren gelost. Dann fügt man eine Lösung von 1,88 g (0,02 Mol) Phenol in 2500 g Methylenchlorid zu. In die gut gerührte Lösung wurden bei pH 13 bis 14 und 21 bis 25°C 198 g (2 Mol) Phosgen eingeleitet. Danach wird 1 ml Ethylpiperidin zugegeben und noch 45 Min. gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,336.

Die Glastemperatur des Polymers wurde zu 212°C bestimmt (DSC).

Beispiel B.3

Wie in Beispiel B.2 wurde eine Mischung aus 114 g (0,5 Mol) Bisphenol A und 155 g (0,5 Mol) Diphenol (II) zum Polycarbonat umgesetzt.

Das Polycarbonat zeigte eine relative Lösungsviskosität von 1,386.

Die Glastemperatur des Polymer wurde zu 195°C bestimmt (DSC).

Beispiel B.4

Wie in Beispiel B.2 wurde eine Mischung aus 159,6 g (0,7 Mol) Bisphenol A und 93 g (0,3 Mol) Diphenol (II) zum Polycarbonat umgesetzt.

Das Polycarbonat zeigte eine relative Lösungsviskosität von 1,437.

Die Glastemperatur des Polymers wurde zu 180°C bestimmt (DSC).

Beispiel B.5

31,0 g (0,1 Mol) Diphenol (II), 24,0 g (0,6 Mol) NaOH und 270 g Wasser werden in einer Inertgas-Atmosphäre unter Rühren gelöst. Dann fübt man eine Lösung von 0,309 g (1,5 Mol-%) 4-(1,3-Tetramethylbutyl)-phenol in 250 g Methylenchlorid zu. In die gut gerührte Lösung wurden bei pH 13 bis 14 und 21 bis 25°C 19,8 g (0,2 Mol) Phosgen eingeleitet. Danach wird 0,1 ml Ethylpiperidin zugegeben und noch 45 Min. gerührt. Die bisphenolatfreie wäßrige Phase wird abgetrennt, die oganische Phase nach Ansäuern mit Phosphorsäure mit Wasser neutral gewaschen und vom Lösungsmittel befreit. Das Polycarbonat zeigte eine relative Lösungsviskosität von 1,314.

Die Glastemperatur des Polymers wurde zu 234°C bestimmt (DSC).

Zur Abschätzung des UV-Beständigkeit der neuen Polycarbonate wurde die Primärradikalbildung bei UV-Bestrahlung mit einer Quecksilberdampflampe (Kantenfilter 305 nm) im Vergleich zu einem Polycarbonat auf

Basis des 2,2-Bis-(4-hydroxyphenyl)-propans bestimmt. Es zeigte sich, daß das Polycarbonat gemäß Beispiel B1 eine geringere Primärradikalbildungsrate und daher eine höhere UV-Beständigkeit aufweist.

Es hat sich nun gezeigt, daß als Flammschutzmittel für die Polycarbonate der deutschen Patentanmeldung P 3 832 396, Phosphorverbindungen, insbesondere Phosphatester günstig sind und außerdem derartige Phosphorverbindungen mit geeigneten Anteilen an Polycarbonaten der deutschen Patentanmeldung P 3 832 396.6 als günstige Flammschutzmittelkonzentrate für thermoplastische Formmassen eingesetzt werden können.

Gegenstand der vorliegenden Erfindung sind somit Mischungen enthaltend

A) 5 bis 99,5 Gewichtsteile, vorzugsweise 10 bis 99 Gewichtsteile, insbesondere 50 bis 99 Gewichtsteile und besonders bevorzugt 85 bis 98 Gewichtsteile an thermoplastischen aromatischen Polycarbonaten der deutschen Patentanmeldung P 3 832 396.6 und

B) 0,5 bis 95 Gewichtsteile, vorzugsweise 1 bis 90 Gewichtsteile, insbesondere 1 bis 50 Gewichtsteile und besonders bevorzugt 2 bis 15 Gewichtsteile, bezogen jeweils auf 100 Gewichtsteile aus A), B), an Phosphorverbindungen mit Ausnahme von Salzen der Phosphonsäure und salzen der Phosphorsäure.

Komponente A

Die gemäß Komponente A) geeigneten Polycarbonate sind bereits einleitend durch Übernahme des Textes der deutschen Patentanmeldung P 3 832 396 definiert.

Komponente B

Phosphorverbindungen gemäß Komponente B) sind beispielsweise Phosphatester, Phosphonatester, Phosphinatester, Phosphinoxide, Alkalisalze, Erdalkalisalze und Ammoniumsalze der Phosphorigsäure und der Phosphinsäure sowie der Phosphatteilester, der Phosphonatteilester und der Phosphorigsäureteilester.

Als organische Reste für diese Ester dienen Alkyl, Aryl, Aralkyl, Alkaryl und gegebenenfalls alkylsubstituiertes Cycloalkyl, wobei diese Reste noch durch Halogen, beispielsweise Cl oder Br, substituiert sein können.

Als Alkalisalze sind Li-Salze, Na-Salze und K-Salze, als Erdalkalisalze sind Mg-Salze, Ca-Salze, Ba-Salze und Sr-Salze, als Ammoniumsalze sind $NH_4$-Salze oder $N(R_4)$-Salze geeignet, worin R, H oder niedriges Alkyl sein kann, wobei mindestens ein R verschieden von H ist.

Bevorzugte Phosphorverbindungen sind solche der Formel (IX)

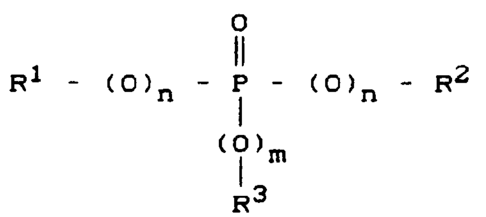

(IX),

worin

$R^1$, $R^2$ und $R^3$ unabhängig voneinander ein gegebenenfalls halogeniertes $C_1$-$C_8$-Alkyl oder ein gegebenenfalls halogeniertes und/oder alkyliertes $C_5$- oder $C_6$-Cycloalkyl oder ein gegebenenfalls halogeniertes und/oder alkyliertes und/oder aralkyliertes $C_6$-$C_{30}$-Aryl, und "n" und "m" unabhängig voneinander 0 oder 1 sind.

Die erfindungsgemäß als Komponente B) einzusetzenden Phosphorverbindungen sind entweder generell bekannt (siehe beispielsweise Ullmann, Enzyklopädie der technischen Chemie, Bd. 18, Seiten 301 ff., 1979) oder nach im Prinzip bekannten Verfahren herstellbar.

Gegebenenfalls halogenierte $C_1$-$C_8$-Alkylreste in (IX) sind gegebenenfalls einfach oder mehrfach halogeniert, sind linear oder verzweigt und beispielsweise Chlorethyl, 2-Chlorpropyl, 2,3-Dibrompropyl, Butyl, Methyl oder Octyl.

Gegebenenfalls halogenierte und/oder alkylierte $C_5$- oder $C_6$-Cycloalkyle in (IX) sind z.B. Cyclopentyl, Cyclohexyl, 3,3,5-Trimethylcyclohexyl und perchloriertes Cyclohexyl.

Gegebenenfalls halogenierte und/oder alkylierte und/oder aralkylierte $C_6$-$C_{30}$-Arylreste in (IX) sind ein oder mehrkernig, gegebenenfalls einfach oder mehrfach halogeniert und/oder alkyliert und/oder aralkyliert und sind beispielsweise Chlorphenyl, Bromphenyl, Pentachlorphenyl, Pentabromphenyl, Phenyl, Kresyl Isopropylphenyl, benzylsubstituiertes Phenyl und Naphthyl.

Als Komponente B) erfindungsgemäß geeignete Phosphorverbindungen sind beispielsweise Tributylphosphat, Tris-(2-chlorethyl)phosphat, Tris-(2,3-dibrompropyl)phosphat, Triphenylphosphat, Trikresylphosphat,

Diphenylkresylphosphat, Diphenyloctylphosphat, Diphenyl-2-ethylkresylphosphat, Tris-(isopropylphenyl) phosphat, Tris-(p-benzylphenyl)phosphat, Triphenylphosphinoxid, Methanphosphonsäuredimethyleter, Methanphosphonsäurediphenylester und Phenylphosphonsäurediethylester.

Geeignete salzartige Phosphorverbindungen gemäß Komponente B) sind beispielsweise Natriumhydrogenphosphit, Kaliumphosphit, Natrium[dimethylphosphinat] und Kalium[diphenylphosphinat].

Geeignete phosphorhaltige Teilestersalze gemäß Komponente B) sind beispielsweise Natrium[diphenylphosphat], Dinatrium[phenylphosphat], Kalium[dikresylphosphat], Natriumphenyl[phenylphosphonat], Natriumphenylphosphit und Kaliummethylphosphit.

Die erfindungsgemäßen Formmassen aus den Komponenten A) + B) sind einerseits bei überwiegendem Polycarbonatgehalt als Polycarbonatformmassen überall dort einsetzbar, wo neben guter Flammwidrigkeit eine hohe Wärmeformbeständigkeit verlangt wird, also z.B. als Gehäusematerial für thermisch belastete oder eine hohe Abwärme erzeugende Geräte.

Bei überwiegendem Gehalt an Phosphorverbindugnen sind die erfindungsgemäßen Mischungen aus A) + B) als flammwidrigmachender Zusatz zu bekannten thermoplastischen Formmassen, wie Polycarbonaten, ABS-Polymerisaten, Polyalkylenterephthalaten usw. sowie deren Gemischen zu verwenden.

In den erfindungsgemäßen Mischungen können 1 bis 90 Gew.-%, vorzugsweise 5 bis 65 Gew.-% und insbesondere 10 bis 50 Gew.-% der Polycarbonatkomponente A) durch andere Thermoplasten mit einer Glasübergangstemperatur von > 10°C, vorzugsweise > 25°C und insbesondere > 50°C ersetzt sein.

Gegenstand der vorliegenden Erfindung sind somit auch Mischungen enthaltend die erfindungsgemäßen Komponenten A) + B) in den erfindungsgemäßen Mischungsverhältnissen, die dadurch gekennzeichnet sind, daß 1 Gew.-% bis 90 Gew.-%, vorzugsweise 5 Gew.-% bis 65 Gew.-% und insbesondere 10 Gew.-% bis 50 Gew.-% der Polycarbonatkomponente A) durch andere Thermoplasten gemäß Komponente C) mit einer Glasübergangstemperatur von > 10°C, vorzugsweise von > 25°C und insbesondere von > 50°C ersetzt sind.

Die anderen Thermoplasten gemäß Komponente C) sind vorzugsweise C)1) andere thermoplastische Polycarbonate als die der Komponente A), C)2) aromatische, thermoplastische Polyestercarbonate, C)3) thermoplastische Polyalkylenterephthalate und C)4) thermoplastische Homopolymerisate von Vinylaromaten, Polymethylmethacrylat oder Copolymerisate von Vinylaromaten mit Vinylcyaniden, (Meth)Acrylsäure, (Meth)Acrylsäure-$C_1$-$C_{18}$-alkylestern, ethylenisch ungesättigten Dicarbonsäuren und/oder Derivaten von ethylenisch ungesättigten Dicarbonsäuren

Andere Polycarbonate als die der Komponente A) gemäß Komponente C)1) sind solche auf Basis von Diphenolen, die jedoch keine Diphenole der Formel (I) einbeziehen.

Geeignete Diphenole für die Polycarbonate der Komponente C)1) sind insbesondere solche der Formel (X)

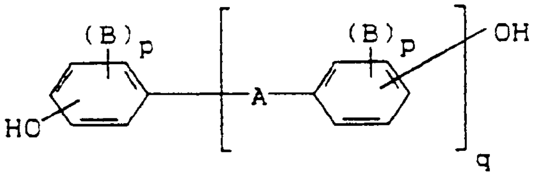

(X)

worin

A eine Einfachbindung, ein $C_1$-$C_5$-Alkylen, ein $C_2$-$C_5$-Alkyliden, ein $C_5$-$C_6$-Cycloalkyliden, -S- oder -$SO_2$-,

B Chlor, Brom oder Methyl

p 0, 1 oder 2 und

q 1 oder 0 sind,

und der Formel (Xa)

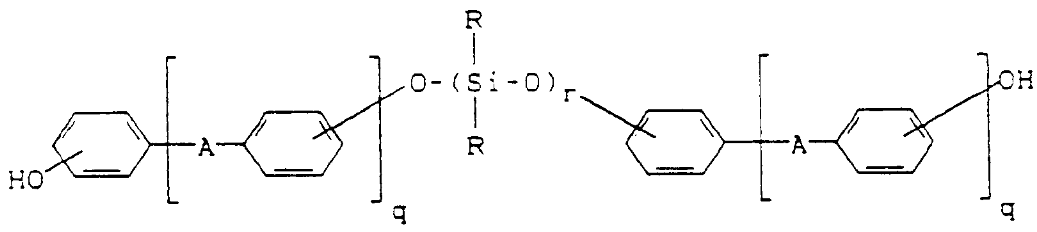

(Xa),

worin

A und q die für Formel (X) genannte Bedeutung haben, und die R's gleich oder verschieden sind und ein lineares $C_1$-$C_{20}$-Alkyl. verzweigtes $C_3$-$C_{20}$-Alkyl, $C_6$-$C_{20}$-Aryl, vorzugsweise $-CH_3$, sind und r eine ganze Zahl zwischen 5 und 100, vorzugsweise zwischen 20 und 80 ist.

Erfindungsgemäß geeignete Polycarbonate gemäß Komponente C)1) sind sowohl Homopolycarbonate als auch Copolycarbonate, wobei die Diphenole der Formel (Xa) nur für die Herstellung von Copolycarbonaten mit anderen, für die Polycarbonatkomponente C)1) geeigneten Diphenolen, insbesondere mit den Diphenolen der Formel (X) eingesetzt werden, wobei der Gewichtsanteil an Diphenolen der Formel (Xa) in den Copolycarbonaten C)1) jeweils zwischen 1 Gew.-% und 20 Gew.-%, vorzugsweise zwischen 1,5 Gew.-% und 15 Gew.-% und insbesondere zwischen 2 Gew.-% und 10 Gew.-%, bezogen jeweils auf die Gewichtssumme aller für die Herstellung der Polycarbonatkomponente C)1) jeweils eingesetzten Diphenole, liegt.

Die Polycarbonatkomponente C)1) kann auch ein Gemisch aus zwei oder mehr der vorstehend definierten Polycarbonatkomponenten C)1) sein, wobei hierbei auch Polydiorganosiloxan-haltige Copolycarbonate einbezogen werden können, deren Gehalt an einkondensierten Diphenolen (Xa) höher als 20 Gew.-%, bezogen auf die Gewichtssumme der für diese Komponente C)1) eingesetzten Diphenole liegt, sofern dieser Gehalt an einkondensiertem (Xa) in einer Polycarbonatkomponente C)1) nicht über 20 Gew.-%, bezogen auf die jeweilige Gewichtssumme aller Diphenole im Gemisch der zwei oder mehr Polycarbonatkomponenten C)1), liegt.

Die mittleren Molekulargewichte $\overline{M}_w$ der Polycarbonatkomponenten C)1) sollen zwischen 10.000 und 200.000, vorzugsweise zwischen 20.000 und 80.000 liegen ($\overline{M}_w$, gemessen durch Ultrazentrifugation oder Streulichtmessung).

Die Herstellung der erfindungsgemäß geeigneten Polycarbonate gemäß Komponente C)1) ist literaturbekannt und kann z.B. mit Phosgen nach dem Phasengrenzflächenverfahren oder mit Phosgen nach dem Verfahren in homogener Phase, dem sogenannten Pyridinverfahren, erfolgen, wobei das jeweils einzustellende Molekulargewicht in bekannter Weise durch eine entsprechende Menge an bekannten Kettenabbrechern erzielt wird (Bezüglich polydiorganosiloxanhaltigen Polycarbonaten, siehe z.B. DE-OS 3 334 782 (Le A 22 594)).

Geeignete Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 (Le A 19 006) oder Monoalkylphenol bzw.Dialkylphenole mit insgesamt 8-20 C-Atomen in den Alkylsubstituenten gemäß DE-OS 3 506 472 (Le A 23 654), wie 3,5-di-tert.-Butylphenol, p-iso-Octylphenol, p-tert.-Octylphenol, p-Dodecylphenol und 2-(3,5-Dimethyl-heptyl)-phenol und 4-(3,5-Dimethyl-heptyl)-phenol.

Die Menge an einzusetzenden Kettenabbrechern beträgt im allgemeinen zwischen 0,5 Mol-% und 10 Mol-%, bezogen jeweils auf die Mol-Summe der eingesetzten Diphenole in der jeweiligen Polycarbonatkomponente C)1).

Geeignete Diphenole der Formel (X) sind z.B. Hydrochinon, Resorcin, 4,4'-Dihydroxydiphenyl, 2,2-Bis-(4-hydroxyphenyl)-propan, 2,4-Bis-(4-hydroxphenyl)-2-methylbutan, 1,1-Bis-(4-hydroxyphenyl)-cyclohexan, 2,2-Bis-(3-chlor-4-hydroxyphenyl)-propan, 2,2-bis-(3,5-dibrom-4-hydroxyphenyl)-propan.

Bevorzugte Diphenole der Formel (X) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Geeignete Diphenole der Formel (Xa) sind solche, in denen R Methyl, Ethyl, Propyl, n-Butyl, tert.-Butyl oder Phenyl ist.

Besonders bevorzugte Diphenole der Formel (Xa) sind die der Formel (Xb)

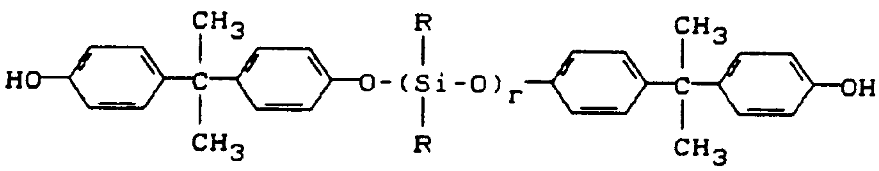

(Xb),

worin
die R's gleich sind und die vorstehend für (Xa) genannte Bedeutung haben, also Methyl etc. oder Phenyl bedeuten und r wiederum eine ganze Zahl zwischen 5 und 100, vorzugsweise zwischen 20 und 80 ist.

Die Diphenole der Formeln (X), (Xa) und (Xb) sind entweder literaturbekannt oder nach literaturbekannten Verfahren herstellbar.

Die erfindungsgemäß geeigneten Polycarbonate gemäß Komponente C)1) können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B. solchen mit drei oder mehr als drei phenolischen Gruppen.

Bevorzugte Polycarbonate gemäß Komponente C)1) sind neben 2,2-Bis-(4-hydroxyphenyl)-propan-Homopolycarbonaten die Copolycarbonate von 2,2-Bis-(4-hydroxphenyl)-propan mit bis zu 15 Mol-%, bezogen auf Mole Diphenole im Copolycarbonat, an 2,2-Bis-(3,5-dibromphenyl)-propan oder Copolycarbonate aus den Diphenolen (X) mit bis zu 20 Gew.-% an Diphenolen (Xa), insbesondere (Xb), bezogen jeweils wiederum auf die Gewichtssumme an Diphenolen (X) + (Xa) bzw. (X) + (Xb) im jeweiligen Copolycarbonat.

Aromatische, thermoplastische Polyestercarbonate gemäß Komponente C)2) im Sinne vorliegender Erfindung sind solche erhältlich in bekannter Weise aus Diphenolen, Phosgen, aromatischen Dicarbonsäuredichloriden, Kettenabbrechern und gegebenenfalls Verzweigern (siehe beispielsweise EP-OS 0 036 080 (Le A 20 203) und US-PS 3 169 121). Die Polyestercarbonate C)2) sind somit als solche entweder bekannt oder nach bekannten Verfahren erhältlich.

Geeignete Diphenole sind beispielsweise die der Formel (X).

Geeignete aromatische Dicarbonsäuredichloride sind beispielsweise Terephthalsäuredichlorid, Isophthalsäuredichlorid, o-Phthalsäuredichlorid, Diphenyl-dicarbonsäure-dichlorid, Diphenylether-dicarbonsäure-dichlorid, Naphthalindicarbonsäure-dichlorid und deren Gemische.

Bevorzugte Gemische sind solche von Terephthalsäuredichloriden mit Isophthalsäuredichloriden im Verhältnis 20:1 bis 1:20, insbesondere von 7:3 bis 3:7.

Geeignete Kettenabbrecher sind Monophenole, wie sie beispielsweise für die Herstellung der Polycarbonatkomponente C)1) beschrieben sind.

Geeignet Kettenabbrecher sind auch Chloride von aromatischen Monocarbonsäuren, die gegebenenfalls durch $C_1$-$C_{22}$-Alkylgruppen und/oder durch Chlor oder Brom substituiert sein können.

Die Menge an Kettenabbrecher beträgt 0,1 Mol-% bis 10 Mol-%, bezogen im Falle von phenolischen Kettenabbrechern auf Mol Diphenole und im Falle von Monocarbonsäurechloriden auf Mole Disäuredichloride in der jeweiligen Polyestercarbonatkomponente C)2).

Geeignete aromatische Monocarbonsäurechloride sind beispielsweise Benzoesäurechlorid und die beiden folgenden Verbindungen

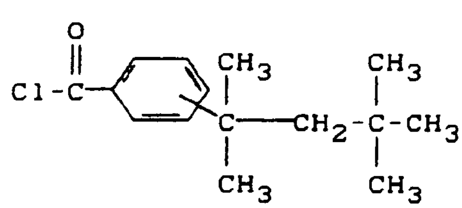

und

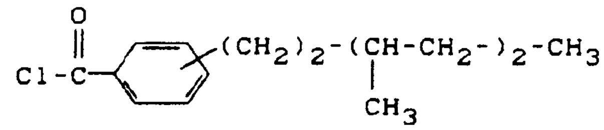

(Siehe dazu DE-OS 3 007 934 (Le A 20 203)).

Geeignete Verzweiger sind die für die Herstellung von verzweigten Polycarbonaten bekannten drei- oder mehr als dreifunktionellen Verbindungen, beispielsweise Verbindungen mit drei phenolischen OH-Gruppen, oder aromatische Tricarbonsäuretrichloride oder aromatische Tetracarbonsäuretetrachloride.

Mögliche Verzweiger und deren einzusetzende Menge sind in der DE-OS 3 007 934 (Le A 20 203), Seite 9 beschrieben.

In den Polyestercarbonaten der Komponente C)2) können bis zu 30 Mol-%, vorzugsweise bis zu 20 Mol-% der aromatischen Dicarbonsäuren und/oder der Diphenole durch aliphatische Dicarbonsäuren und/oder aliphatische Diole, beispielsweise durch Adipinsäure und/oder durch 1,4-Butandiol ersetzt sein.

Weiterhin kann in den Polyestercarbonaten der Komponente C)2) ein Teil der phenolischen Reaktionspartner und ein Teil der aromatischen Carbonsäurechloridreaktionspartner durch aromatische Hydroxycarbonsäurechloride, beispielsweise durch Hydroxybenzoesäurechlorid ersetzt werden.

Geeignete Polyestercarbonate gemäß Komponente C)2) haben vorzugsweise bis etwa 80 Mol-%, vorzugsweise bis etwa 50 Mol-% Carbonatgruppen, bezogen auf die Molsumme an Carbonatgruppen und Carbonsäureestergruppen.

Sowohl der Ester als auch der Carbonatanteil der Polyestercarbonate C)2) kann in Form von Blöcken oder statistisch verteilt im Polykondensat vorliegen.

Die mittleren Molekulargewichte der Polyestercarbonatkomponenten C)2) wird durch die relative Lösungsviskosität ($\eta_{rel}$) ausgedrückt. Diese soll im Bereich von 1,18 bis 1,4, vorzugsweise von 1,22 bis 1,3 (gemessen an Lösungen von 0,5 g Polyestercarbonat C)2) in 100 ml $CH_2Cl_2$-Lösung bei 25°C) liegen.

Das Verhältnis von Carbonatgruppen zu Estergruppen im Polyestercarbonat C)2) kann auch durch Zumischen von Polycarbonatkomponente C)1) beliebig variiert werden, so daß auch gegebenenfalls beliebig kleine Estergruppengehalte im Gemisch der erfindungsgemäß verwendbaren Komponenten C)2) und C)1) erreichbar sind.

Polyalkylenterephthalate gemäß Komponente C)3) im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen dieser Reaktionsprodukte.

Bevorzugte Polyalkylenterephthalate gemäß Komponente C)3) lassen sich aus Terephthalsäure (oder ihren reaktionsfähigen Derivaten) und aliphatischen oder cycloaliphatischen Diolen mit 2-10 C-Atomen nach bekannten Methoden herstellen (Kunststoff-Handbuch, Bd. VIII. S. 695 ff, Carl Hanser Verlag, München 1973).

Bevorzugte Polyalkylenterephthalate gemäß Komponente C)3) enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-Reste.

Die bevorzugten Polyalkylenterephthalate C)3) können neben Terephthalsäureresten bis zu 20 Mol-% Reste anderer aromatischer Dicarbonsäuren mit 8-14 C-Atomen oder aliphatischer Dicarbonsäuren mit 4-12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure oder Cyclohexandiessigsäure.

Die bevorzugten Polyalkylenterephthalate C)3) können neben Ethylenglykol- bzw. Butandiol-1,4-resten bis zu 20 Mol-% anderer aliphatischer Diole mit 3-12 C-Atomen oder cycloaliphatischer Diole mit 6-21 C-Atomen enthalten, z.B. Reste von Propandiol-1,3, 2-Ethylpropandiol-1,3, Neopentylglykol, Pentan-diol-1,5, Hexandiol-1,6, Cyclohexan-di-methanol-1,4, 3-Methylpentandiol-2,4, 2-Methylpentandiol-2,4, 2,2,4-Trimethylpentandiol-1,3 und -1,6, 2-Ethylhexandikol-1,3, 2,2-Diethylpropandiol-1,3, Hexandiol-2,5, 1,4-Di-(ß-hydroxyethoxy)-benzol, 2,2-Bis-4-hydroxycyclohexyl)-propan, 2,4-Dihydroxy-1,1,3,3-tetramethylcyclobutan, 2,2-Bis-(3-ß-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate gemäß Komponente C)3) können durch Einbau relativ kleiner Mengen 3- oder 4-wertiger Alkohole oder 3- oder 4-basiger Carbonsäuren, wie sie z.B. in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate C)3), die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Polyalkylenterepthalate C)3) sind auch Copolyester, die aus mindestens zwei der obengenannten Alkoholkomponenten hergestellt sind; besonders bevorzugte Copolyester sind Poly-(ethylenglykol/butandiol-1,4)-terephthalate.

Die als Komponente C)3) verwendeten Polyalkylenterephthalate besitzen im allgemeinen eine Intrisic-Viskosität von 0,4-1,5 dl/g, vorzugsweise 0,5-1,3 dl/g, insbesondere 0,6-1,2 dl/g, jeweils gemessen in Phenol/o-Dichlorbenzol (1:1 Gew-Tl.) bei 25°C.

Die Polyalkylenterephthalate gemäß Komponente C)3) sind somit als solche entweder bekannt oder nach bekannten Verfahren erhältlich.

Zur Herstellung der Polymerisate gemäß Komponente C)4) geeignete Vinylaromaten sind Styrol, α-Methylstyrol sowie deren kernhalogenierte und kernalkylierte Derivate wie p-Methylstyrol, p-Chlorstyrol und p-Bromstyrol.

Geeignete Vinylcyanide sind Acrylnitril und Methacrylnitril, geeignete (Meth)Acrylsäure-$C_1$-$C_{18}$-alkylester sind Methylmethacrylat, n-Butylacrylat, tert.-Butylmethacrylat, n-Hexylmethacrylat, n-Dodecylacrylat und n-Stearyl-methacrylat.

Geeignete ethylenisch ungesättigte Dicarbonsäuren und deren Derivate sind Maleinsäure, Fumarsäure, Maleinsäureanhydrid, N-Alkylmaleinsäureimid, N-Phenylmaleinsäureimid, Maleinsäure-di-ethylester und Fumarsäurediethylester.

Zur Herstellung der Copolymerisate gemäß Komponente C)4) können die verschiedenen, für die Herstellung von C)4) genannten ungesättigten Monomeren, also die Vinylaromaten, Vinylcyanide, (Meth)Acrylsäure, (Meth)Acrylsäurealkylester, ethylenisch ungesättigten Dicarbonsäuren und die Derivate von ethylenisch ungesättigten Dicarbonsäuren in den gewünschten Mengenverhältnissen polymerisiert werden.

Bevorzugte Polymerisate C)4) umfassen solche aus

a) 50 bis 99 Gew.-% Styrol, α-Methylstyrol, Methylmethacrylat oder Mischungen daraus mit

b) 50 bis 1 Gew.-% (Meth)Acrylnitril, Maleinsäureanhydrid, Methylmethacrylat oder Mischungen daraus.

Bevorzugtes Homopolymerist von Vinylaromaten ist Polystyrol.

Die Homo- und Copolymerisate gemäß Komponente C)4) sind bekannt und lassen sich beispielsweise durch radikalische Polymerisation, insbesondere durch Emulsions-, Suspensions-, Lösungs- oder Massepolymerisation herstellen.

Die Polymerisate gemäß Komponente C)4) besitzen vorzugsweise Molekulargewichte $M_w$ (Gewichtsmittel, ermittelt durch Lichtstreuung oder Sedimentation) zwischen 15.000 und 200.000.

Die Polymerisate gemäß Komponente C)4) sind somit als solche entweder bekannt oder nach bekannten Verfahren erhältlich.

Durch den erfindungsgemäßen Ersatz der Polycarbonatkomponente A) durch die Thermoplastkomponente C) können beispielsweise Verarbeitbarkeit und/oder Spannungsrißbeständigkeit und/oder Zähigkeit der erfindungsgemäßen Formmassen verbessert werden.

Es versteht sich daraus von selbst, daß auch mehrere, unterschiedliche Komponenten C) gegen die Polycarbonatkomponente A) in den erfindungsgemäßen Formmassen im Rahmen der angegebenen Mengenverhältnisse ausgetauscht sein können.

In den erfindungsgemäßen Mischungen aus den Komponenten A) + B) können 1 Gew.-% bis 50 Gew.-%, vorzugsweise 2 Gew.-% bis 30 Gew.-% der Polycarbonatkomponente A) durch Pfropfpolymerisate D) ersetzt werden, wobei die Pfropfpolymerisate durch Pfropfung von ethylenisch ungesättigten Monomeren D)1) auf eine Kautschukgrundlage D)2), welche eine Glastemperatur von kleiner -10°C hat, erhalten werden.

Gegenstand der vorliegenden Erfindung sind somit auch Mischungen enthaltend die erfindungsgemäßen Komponenten A) + B) in den erfindungsgemäßen Mischungsverhältnissen, die dadurch gekennzeichnet sind, daß 1 Gew.-% bis 50 Gew.-%, vorzugsweise 2 Gew.-% bis 30 Gew.-% der Polycarbonatkomponente A) durch Pfropfpolymerisate D), welche durch Pfropfung von ethylenisch ungesättigten Monomeren D)1) auf Kautschukgrundlagen D)2) mit einer Glasübergangstemperatur von kleiner -10°C erhältlich sind, ersetzt sind.

Da bei der Pfropfreaktion die Pfropfmonomeren bekanntlich nicht unbedingt vollständig auf die Pfropfgrundlage aufgefropft werden, werden erfindungsgemäß unter Pfropfpolymerisaten D) auch solche Produkte verstanden, die durch Polymerisation der Pfropfmonomeren in Gegenwart der Pfropfgrundlage gewonnen werden.

Die Pfropfpolymerisatkomponente D) umfaßt beispielsweise Pfropfcopolymerisate mit kautschukelastischen Eigenschaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth-)Acrylsäureester mit 1 bis 18 C-Atomen in der Alkoholkomponente. Derartige Propfpolymerisate sind literaturbekannt oder oder

nach literaturbekannten Verfahren erhältlich.

Bevorzugte Pfropfpolymerisatkomponenten D) sind partiell vernetzt und besitzen Gelgehalte, von mehr als 20 Gew.-%, vorzugsweise mehr als 40 Gew.-% und insbesondere über 60 Gew.-%.

Der Gelgehalt der Pfropfpolymerisate D) sowie deren Pfropfgrundlagen D)2) wird bei 25°C in geeigneten Lösungsmitteln, z.B. Dimethylformamid oder Toluol, bestimmt (M. Hoffmann, H. Krömer, R. Kuhn, Polymeranalytik I und II, Georg Thieme-Verlag, Stuttgart 1977).

Bevorzugte Komponenten D) sind Pfropfpolymerisate aus

D)1) 5 bis 90 Gewichtsteilen, vorzugsweise 30 bis 80 Gewichtsteilen einer Mischung aus

D)1)1) 50 bis 95 Gew.-% Styrol, kernhalogenierten Styrolen, kernmethylierten Styrolen, Methylmethacrylat oder Mischungen dieser Verbindungen, und

D)1)2) 50 bis 5 Gew.-% Acrylnitril, Methacrylnitril, Maleinsäureanhydrid, N-$C_1$-$C_4$-Alkyl substituierte Maleinimide, N-Phenyl substituierte Maleinimide, Methylmethacrylat oder Mischungen dieser Verbindungen auf

D)2) 95 bis 10 Gewichtsteile, vorzugsweise 20 bis 70 Gewichtsteile einer Kautschukgrundlage mit einer Glastemperatur unter -10°C.

Geeignete Kautschukgrundlagen D)2) sind hierbei beispielsweise Dienkautschuke, Alkylacrylatkautschuke, EPM- und EPDM-Kautschuke sowie Silikonkautschuke.

Bevorzugte Pfropfpolymerisatkomponenten D) sind beispielsweise mit Styrol und/oder mit Acrylnitril und/oder mit (Meth-)Acrylsäurealkylestern gepfropfte Polybutadiene, Butadien/Styrol-Copolymerisate und Acrylatkautschuke, mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (US-PS 3 919 353) beschrieben sind. Ein Beispiel dafür sind die bekannten ABS-Polymerisate.

Besonders bevorzugte Pfropfpolymerisate D) sind solche, die durch Pfropfreaktion von

D)1) 10 bis 70, vorzugsweise 15 bis 50 und insbesondere von 20 bis 40 Gew.-%, bezogen auf Pfropfprodukte D), mindestens eines (Meth-) Acrylsäureesters oder von

D)1)1) 10 bis 70, vorzugsweise 15 bis 50 und insbesondere von 20 bis 40 Gew.-% eines Gemisches von 10 bis 50, vorzugsweise 20 bis 35 Gew.-Teilen Acrylnitril oder (Meth)Acrylsäureester mit 90 bis 50, vorzugsweise 80 bis 65 Gew.-Teilen Styrol auf

D)2) 90 bis 30, vorzugsweise 85 bis 50 und insbesondere 80 bis 60 Gew.-%, bezogen auf Pfropfprodukt D), eines Butadienpolymerisats mit mindestens 50 Gew.-%, bezogen auf D)2), an Butadienresten erhaltlich sind.

Hierbei ist der Gelanteil in D)2) mindestens 70 Gew.-% (gemessen in Toluol), der Pfropfgrad G des Pfropfpolymerisats D) 0,15 bis 0,55 und der mittlere Teilchendurchmesser $d_{50}$ von D) 0,05 bis 2 μm vorzugsweise 0,1 bis 0,6 μm.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

(Meth)Acrylsäureester im vorstehenden Zusammenhang sind Ester der Acrylsäure oder der Methacrylsäure und einwertiger Alkohole mit 1 bis 18 C-Atomen. Besonders bevorzugt sind Methacrylsäuremethylester, -ethylester und -propylester, n-Butylacrylat und t-Butyl(meth)acrylat.

Im vorstehenden Zusammenhang kann D)2) neben den mindestens 50 Gew.-% Butadienresten Reste anderer ethylenisch ungesättigter Monomerer einpolymerisiert enthalten, beispielsweise Styrol, Acrylnitril, Ester der Acrylsäure und der Methacrylsäure mit $C_1$-$C_4$-Alkoholen wie Methylacrylat, Ethylacrylat, Methylmethacrylat und Ethylmethacrylat, Vinylester und/oder Vinylether.

Besonders bevorzugtes D)2) besteht aus 100 Gew.-% an Butadienresten.

Besonders bevorzugte Pfropfpolymerisate D) sind auch solche, die durch Pfropfreaktion von

D)1) 10 bis 80 Gew.-%, bezogen auf Gewicht D), solchen polymerisierbaren, ethylenisch ungesättigten Monomeren, die homo- oder copolymerisiert Polymere mit einer Glasübergangstemperatur von größer 25°C liefern, auf

D)2) 90 bis 20 Gew.-%, bezogen auf Gewicht D), an Acrylatkautschuken mit einer Glasübergangstemperatur von weniger als -20°C, erhältlich sind.

Derartige Monomere D)1) sind die weiter oben (Seiten 49 und 50) beschriebenen Mischungen aus D)1)1 und D)1)2.

Acrylatkautschuke D)2) gemäß vorstehender Definition sind vorzugsweise Polymerisate aus Acrylsäurealkylestern, gegebenenfalls mit bis zu 40 Gew.-%, bezogen auf D)2), anderen polymerisierbaren, ethylenisch ungesättigten Monomeren. Zu den bevorzugten polymerisierbaren Acrylsäureestern gehören $C_1$-$C_8$-Alkylester,

beispielsweise Methyl-, Ethyl-, Butyl-, n-Octyl- und 2-Ethylhexylester, Halogen-$C_1$-$C_8$-alkyl-ester, wie Chlorethylacrylat, sowie Mischungen dieser Monomeren.

Bevorzugte "andere" polymerisierbare, ethylenisch ungesättigte Monomere, die neben den Acrylsäureestern gegebenenfalls zur Herstellung der Pfropfgrundlage D)2) dienen können, sind beispielsweise Acrylnitril, Styrol, α-Methylstyrol, Acrylamide, Vinyl-$C_1$-$C_6$-alkylether Methylmethacrylat, Butadien.

Bevorzugte Acrylatkautschuke als Pfropfgrundlage D)2) sind Emulsionspolymerisate, die einen Gelgehalt von mindestens 60 Gew.-% aufweisen.

Die Acrylatkautschuke D)2) können in bekannter Weise durch Monomere mit mindestens zwei polymerisierbaren Doppelbindungen vernetzt sein.

Bevorzugte, vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen wie beispielsweise Ethylenglykoldimethacrylat oder Allylmethacrylat; Ester mehrwertiger Säuren mit ungesättigten Alkoholen wie Triallylphosphat oder Diallylphthalat; Heterocyclen mit ungesättigten Seitenresten wie Trivinylcyanurat, Triallylcyanurat, Triallylisocyanurat und Triacryloylhexahydro-5-triazin; schließlich noch polyfunktionelle Vinylverbindungen wie Trivinylbenzole und Triallylbenzole.

Die Menge der vernetzten Monomere beträgt vorzugsweise 0,02 bis 5, insbesondere 0,05 bis 2 Gew.-%, bezogen auf die Pfropfgrundlage D)2).

Bei cyclischen vernetzenden Monomeren mit mindestens 3 ethylenisch ungesättigten Gruppen ist es vorteilhaft, die Menge auf unter 1 Gew.-% der Pfropfgrundlage D)2), zu beschränken.

Die Pfropfpolymerisatkomponenten D) sind somit als solche entweder bekannt oder nach bekannten Verfahren erhältlich.

Durch den erfindungsgemäßen Ersatz der Polycarbonatkomponente A) durch die Pfropfpolymerisatkomponente D) wird das Zähigkeits- und Elastizitätsverhalten der Formmassen günstig beeinflußt.

Es versteht sich daraus von selbst, daß auch mehrere, unterschiedliche Komponenten D) gegen die Polycarbonatkomponente A) in den erfindungsgemäßen Formmassen im Rahmen der angegebenen Mengenverhältnisse ausgetauscht sein können.

In den erfindungsgemäßen Formmassen aus den Komponenten A) + B) kann auch ein Teil der Polycarbonatkomponente A) durch eine oder mehrere Komponenten C) und eine oder mehrere Komponenten D) ersetzt sein.

Hierbei sind die Mengenverhältnisse so, daß 1 Gew.-% bis 90 Gew.-% der Komponente A) durch eine oder mehrere Komponenten C), und daß gleichzeitig 1 Gew.-% bis 50 Gew.-%, bezogen auf 100 Gew.-% der Summe aus A und C, durch eine oder mehrere Komponenten D) ersetzt sind.

Gegenstand der vorliegenden Erfindung sind somit auch Mischungen enthaltend die erfindungsgemäßen Komponenten A) + B) in den erfindungsgemäßen Mischungsverhältnissen, die dadurch gekennzeichnet sind, daß 1 Gew.-% bis 90 Gew.-% der Polycarbonatkomponente A) durch andere Thermoplasten gemäß Komponente C) ersetzt sind, und daß 1 Gew.-% bis 50 Gew.-%, bezogen auf 100 Gew.-% der Summe aus A) und C), durch Pfropfpolymerisate gemäß Komponente D) ersetzt sind.

Bei der Herstellung der Pfropfpolymerisatkomponenten D) entstehen häufig als Nebenprodukte Polymerisate gemäß Komponente C)4), besonders dann, wenn große Mengen Monomere D)1) auf kleine Mengen Kautschuk D)2) gefropft werden. Die erfindungsgemäß einzusetzende Menge an Komponente C4) bezieht diese Nebenprodukte der Pfropfpolymerisation nicht mit ein, vielmehr werden diese jeweils den Pfropfpolymerisatkomponenten D) zugerechnet.

Die erfindungsgemäßen Formmassen aus den Komponenten A) + B) und gegebenenfalls [C) und/oder D)] können zur Verbesserung ihrer flammwidrigen Eigenschaften noch fluorierte Polyolefine E) in Mengen von 0,05 bis 15 Gew.-Teilen, vorzugsweise in Mengen von 0,1 bis 5 Gew.-Teilen, bezogen jeweils auf 100 Gew.-Teile der Mischung aus A) + B) und gegebenenfalls [C) und/oder D)] zugesetzt enthalten.

Durch den Zusatz der Polyolefine E) wird die Abtropfneigung der erfindungsgemäßen Mischungen im Brandfall reduziert oder sogar ganz unterdrückt.

Gegenstand der vorliegenden Erfindung sind somit auch Mischungen enthaltend die Komponenten

1. A) + B) oder
2. A) + B) + C) oder
3. A) + B) + D) oder
4. A) + B) + C) + D)

jeweils in den erfindungsgemäßen Mengenverhältnissen, die dadurch gekennzeichnet sind, daß sie zusätzlich fluorierte Polyolefine gemäß Komponente E) in Mengen von 0,05 bis 15 Gew.-Teilen, vorzugsweise in Mengen von 0,1 bis 5 Gew.-Teilen, bezogen jeweils auf 100 Gew.-Teile der Summe der Komponenten A) + B) und gegebenenfalls [C) und/oder D)], enthalten, wobei die fluorierten Polyolefine einen mittleren Teilchendurchmesser $d_{50}$ von 0,05 μm bis 1.000 μm und eine Dichte von 1,2 g/cm³ bis 2,3 g/cm³ haben.

Die erfindungsgemäß zu verwendenden fluorierten Polyolefine gemäß Komponente E) sind hochmolekular und besitzen Glasübergangstemperaturen angefangen von -30°C bis über +100°C, Fluorgehalte vorzugsweise von 65 Gew.-% bis 76 Gew.-%, insbesondere von 70 Gew.-% bis 76 Gew.-% und, wie bereits zum Teil erwähnt, mittlere Teilchendurchmesser $d_{50}$ von 0,05 μm bis 1.000 μm, vorzugsweise von 0,05 μm bis 20 μm und insbesondere von 0,08 μm bis 10 μm, und wie ebenfalls zum Teil erwähnt, Dichten von 1,2 g/cm³ bis 2,3 g/cm³, vorzugsweise von 1,2 g/cm³ bis 1,9 g/cm³.

Bevorzugte Komponenten E) sind Polytetrafluorethylen, Polyvinylidenfluorid, Tetrafluorethylen/Hexafluorpropylen- und Ethylen/Tetrafluorethylen-Copolymerisate.

Die fluorierten Polyolefine gemäß Komponente E) sind im Prinzip bekannt (vergleiche "Vinyl and Related Polymers" von Schildknecht, John Wiley & Sons, Inc., New York, 1962, Seiten 484-494; "Fluorpolymers" von Wall, Wiley-Interscience, John Wiley & Sons, Inc., New York, Band 13, 1970 Seiten 623-654; "Modern Plastics Encyclopedia", 1970-1971, Band 47, Nr. 10 A, Oktober 1970, Mc Graw-Hill, Inc., New York, Seiten 134 und 774; "Modern Plastics Encyclopedia", 1975-1976, Oktober 1975, Band 52, Nr. 10 A, Mc Graw-Hill, Inc., New York, Seiten 27, 28 und 472 und US-PS 3 671 487, 3 723 373 und 3 838 092).

Sie sind zudem nach bekannten Verfahren erhältlich, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten siehe beispielsweise US-Patent 2 393 967). Je nach Einsatzform kann die Dichte dieser Materialien zwischen 1,2 und 2,3 g/cm³, die mittlere Teilchengröße zwischen 0,05 und 1000 μm variieren.

Die erfindungsgemäß zu verwendenden fluorierten Polyolefine gemäß Komponente E) mit bevorzugten Teilchengrößen $d_{50}$ von 0,05 μm bis 20 μm, insbesondere von 0,08 μm bis 10 μm, und mit bevorzugten Dichten von 1,2 g/cm³ bis 1,9 g/cm³ werden vorzugsweise in Form von koagulierten Mischungen von Emulsionen oder Dispersionen dieser fluorierten Polyolefine E) mit Emulsionen bzw. Dispersionen der Pfropfpolymerisate D) oder der Polymerisate C)4) eingesetzt, sofern jeweils die erfindungsgemäßen Mischungen aus A) + B) Polymerisate C)4) oder Pfropfpolymerisate D) einbezogen haben. Einzelheiten zu dieser Technik der Einarbeitung sind beispielsweise in der EP-A 0 131 751 (Le A 22 391) beschrieben.

Die Herstellung einer derartigen koagulierten Mischung erfolgt beispielsweise, indem zuerst eine wäßrige Emulsion (Latex) eines Pfropfpolymerisats D) oder eines Polymerisats C)4) mit mittleren Latexteilchengrößen von 0,05 μm bis 2 μm, insbesondere von 0,1 μm bis 0,6 μm mit einer feinteiligen Emulsion der vorstehend genannten fluorierten Polyolefine E) mit bevorzugten Teilchengrößen und Dichten vermischt werden.

Derartige Emulsionen von fluorierten Polyolefinen E) sind bekannt und auch im Handel erhältlich, beispielsweise als Teflon® 30N der Firma DuPont.

Derartige Emulsionen von fluorierten Polyolefinen E) besitzen üblicherweise Feststoffgehalte von 30 Gew.-% bis 70 Gew.-%, insbesondere von 50 Gew.-% bis 60 Gew.-%.

Demgegenüber besitzen geeignete Emulsionen der Pfropfpolymerisate D) oder der Polymerisate C)4). Feststoffgehalte von 25 Gew.-% bis 50 Gew.-%, vorzugsweise von 30 Gew.-% bis 45 Gew.-%.

In der Mischung der Emulsionen liegt das Gewichtsverhältnis der Komponenten D) bzw. C)4) zur Komponente E) zwischen 95:5 und 60:40. Die Koagulation der Mischung der Emulsionen kann durch Sprühtrocknen, Gefriertrocknen oder durch Zusatz von anorganischen oder organischen Salzen, Säuren oder Basen oder durch Zusatz von organischen, mit Wasser mischbaren Lösungsmitteln, wie beispielsweise Alkoholen oder Ketonen, zu der Mischung der Emulsionen erfolgen.

Dieser Zusatz erfolgt bei Temperaturen von 20°C bis 150°C, insbesondere von 50°C bis 100°C. Die Trocknung erfolgt bei Temperaturen von 50°C bis 200°C, vorzugsweise bei 70°C bis 100°C.

Die Abtrennung der durch Zusatz koagulierten Mischungen erfolgt z.B. durch Zentrifugation und Filtration.

Die Einarbeitung der koagulierten und trockenen Mischungen in die erfindungsgemäßen Formmassen erfolgt in an sich bekannter Weise.

Die fluorierten Polyolefine gemäß Komponente E) können aber auch in Pulverform direkt ohne die vorstehend beschriebene Koagulation mit den Komponenten C)4) oder D) in die erfindungsgemäßen Abmischungen in bekannter Weise eingearbeitet werden. Hierbei sind für die pulverförmigen Komponenten E) Teilchengrößen von 100 μm bis 1000 μm und Dichten von 2,0 g/cm³ bis 2,3 g/cm³ besonders günstig zu handhaben.

Die erfindungsgemäßen Formmassen aus den Komponenten A) + B) + E) und gegebenenfalls [C) und/oder D)] können als Flammschutzsynergisten zur Komponente E) zusätzlich organische Chlorverbindungen oder organische Bromverbindungen als Komponente F) in Mengen von 1 Gew.-Teil bis Gew.-Teilen, vorzugsweise von 2 Gew.-Teilen bis Gew.-Teilen, bezogen jeweils auf 100 Gew.-Teile der Mischung aus A) + B) und gegebenenfalls [C) und/oder D)] zugesetzt enthalten.

Gegenstand der vorliegenden Erfindung sind somit auch Mischungen enthaltend die Komponenten

1. A) + B) + E) oder
2. A) + B) + C) + E) oder
3. A) + B) + D) + E) oder
4. A) + B) + C) + D) + E) jeweils

in den erfindungsgemäßen Mengenverhältnissen, die dadurch gekennzeichnet sind, daß sie zusätzlich organische Chlorverbindungen oder organische Bromverbindungen als Komponenten F) in Mengen von 1 Gew.-Teil bis 50 Gew.-Teilen, vorzugsweise von 2 Gew.-Teilen bis 30 Gew.-Teilen, bezogen jeweils auf 100 Gew.-teile der Summe der Komponenten A) + B) und gegebenenfalls [C) und/oder D)] zugesetzt enthalten.

Als Komponente F) geeignete organische Chlorverbindungen und organische Bromverbindungen sind solche, die bei der Herstellung und Verarbeitung der erfindungsgemäßen Formmassen aus den Komponenten A) + B) + E) und gegebenenfalls [C) und/oder D]) weitgehend stabil sind, so daß keine größeren Mengen korrosiver Gase freigesetzt werden und die Wirksamkeit somit außerdem nicht gemindert wird.

Bevorzugte Komponenten F) sind

1. chlorierte und bromierte Diphenyle, wie Octachlordiphenyl, Decachlordiphenyl, Octabromdiphenyl, Decabromdiphenyl;
2. chlorierte und bromierte Diphenylether, wie Octa- und Decachlordiphenylether und Octa- und Decabromdiphenylether;
3. chloriertes und bromiertes Phthalsäureanhydrid und seine Derivate, wie Phthalimide und Bisphthalimide, z.B. Tetrachlor- und Tetrabromphthalsäureanhydrid, Tetrachlor- und Tetrabromphthalimid, N,N'-Ethylen-bis-tetrachlor und N,N'-Ethylen-bis-tetrabromphthalimid, N-Methyltetrachlor- und N-Methyltetrabromphthalimid;
4. chlorierte und bromierte Bisphenole, wie 2,2-Bis-(3,5-di-chlor-4-hydroxphenyl)-propan und 2,2-Bis-(3,5-di-brom-4-hydroxyphenyl)-propan,
5. 2,2-Bis-(3,5-dichlor-4-hydroxyphenyl)-propan-Oligocarbonate und 2,2-Bis-(3,5-dibrom-4-hydroxyphenyl)-propan-Oligocarbonate mit einem mittleren Polykondensationsgrad von 2-20, und
6. chlorierte und bromierte Polyphenylenoxide.

Bromverbindungen werden gegenüber den Chlorverbindungen bevorzugt.

Besonders bevorzugt sind das 2,2-Bis-(3,5-dibrom-4-hydroxyphenyl)-propan und die Oligomeren auf Basis dieses Bisphenols mit 2 bis 20 Monomereneinheiten.

Die Zugabe einer separaten Komponente F) kann auch entfallen, wenn über eine oder mehrere der Komponenten A) bis D) der Brom- bzw. der Chlorgehalt eingeführt wird. Je nach Art und Kombination der Komponenten A), B), C), D) und E) in den erfindungsgemäßen Formmassen sind 1 Gew.-Teil bis 20 Gew.-Teile, vorzugsweise 2 Gew.-Teile bis 10 Gew.-Teile Brom und/oder Chlor, bezogen jeweils auf 100 Gew.-Teile an erfindungsgemäßer Formmasse aus A) + B) und gegebenenfalls [C) und/oder D)], erwünscht.

Die erfindungsgemäßen Formmassen können weitere, für Polycarbonate und/oder für die jeweiligen anderen Thermoplasten gemäß Komponente C) und/oder für die Pfropfpolymerisate gemäß Komponente D) bekannte Zusätze wie Stabilisatoren, Pigmente, Fließmittel, Entformungsmittel, Füllstoffe, Verstärkungsstoffe und/oder Antistatika in den für die Polycarbonate, die anderen Thermoplasten und für die Pfropfpolymerisate üblichen Mengen enthalten.

Gegenstand der vorliegenden Erfindung sind somit auch Mischungen enthaltend die erfindungsgemäßen Komponenten A) + B) und gegebenenfalls {C) und/oder D) und/oder [E) und gegebenenfalls F)]} jeweils in den erfindungsgemäßen Mengenverhältnissen sowie zusätzlich mindestens ein Additiv ausgewählt aus Stabilisatoren, Pigmenten, Fließmitteln, Entformungsmitteln, Füllstoffen, Verstärkungsstoffen und Antistatika in den üblichen Mengen.

Die erfindungsgemäßen Formmassen können hergestellt werden, indem man die Bestandteile in bekannter Weise vermischt und bei erhöhten Temperaturen, vorzugsweise bei 200 bis 330°C, in üblichen Vorrichtungen, wie Innenknetern, Extrudern oder Doppelwellenschnecken, schmelzcompoundiert oder schmelzextrudiert. Die einzelnen Komponenten können nacheinander oder gleichzeitig gemischt werden.

Gegenstand der vorliegenden Erfindung ist somit auch ein Verfahren zur Herstellung der erfindungsgemäßen Mischungen enthaltend die Komponenten A) + B) und gegebenenfalls {C) und/oder D) und/oder [E) und gegebenenfalls F)]} sowie gegebenenfalls mindestens einen weiteren Zusatz ausgewählt aus Stabilisatoren, Pigmenten, Fließmitteln, Entformungsmitteln, Füllstoffen, Verstärkungsstoffen und Antistatika, das dadurch gekennzeichnet ist, daß man die jeweiligen Komponenten nacheinander oder gleichzeitig in bekannter Weise vermischt und anschließend bei erhöhten Temperaturen, vorzugsweise bei 200°C bis 330°C in üblichen Vorrichtungen schmelzcompoundiert oder schmelzextrudiert.

Die erfindungsgemäßen Mischungen können zur Herstellung von Formkörpern jeder Art beispielsweise durch Spritzgießen verwendet werden. Beispiele für Formkörper sind: Gehäuseteile (z.B. für Haushaltsgeräte, wie Saftpressen, Kaffeemaschinen, Mixer), Abdeckplatten für das Baugewerbe oder Automobilteile. Sie werden außerdem für elektrische Geräte, z.B. für Steckerleisten, eingesetzt, weil sie sehr gute elektrischen Eigenschaften haben.

Formkörper können auch durch Tiefziehen aus vorher aus den erfindungsgemäßen Formmassen hergestellten Platten oder Folien hergestellt werden.

Ein weiterer Gegenstand der vorliegenden Erfindung ist somit auch die Verwendung der erfindungsgemäßen Mischungen zur Herstellung von Formkörpern.

Beispiele

1. Eingesetzte Komponenten

Komponente A)

1436,4 g (6,3 Mol) Bisphenol A (2,2-Bis(4-hydroxyphenyl)propan, 2387,0 g (7,7 Mol) 1,1-Bis-(4-hydroxyphenyl)-3,3,5-trimethylcyclohexan, 7476,0 g (84 Mol) 45 %ige NaOH und 33,7 l Wasser werden in einer Inertgas-Atmosphäre unter Rühren gelöst. Dann fügt man eine Lösung von 36,9 g (0,392 Mol) Phenol in 11 l Methylenchlorid und 13 l Chlorbenzol zu. In die gut gerührte Lösung wurden pH 13-14 und 21-25°C 2772 g (28 Mol) Phosgen eingeleitet. Danach werden 14 ml Ethylpiperidin zugegeben und noch 45 Minuten gerührt. Die bisphenolatfreie wäßrige Phase wird abgetrennt, die organische Phase nach Ansäuren mit Phosphorsäure mit Wasser elektrolytfrei gewaschen und vom Lösungsmittel befreit. Das Polycarbonat zeigte eine rel. Lösungsviskosität von 1,30. Die Glastemperatur des Polymers wurde zu 206°C bestimmt (DSC).

Komponente B)

Triphenylphosphat

Komponante C)1)

Copolycarbonat aus 90 Gew.-% Bisphenol A mit 10 Gew.-Tetrabrombisphenol A mit einer relativen Lösungsviskosität von 1,284, gemessen in $CH_2Cl_2$ bei 25°C und einer Konzentration von 0,5 Gew.-%; Gehalt an Brom: 5 Gew.-%.

Komponente C)3)

Lineares Polyethylenterephthalat mit einer Intrinsic-Viskosität $[\eta]$ = 0,76 dl/g, gemessen in Phenol / o-Dichlorbenzol (1:1 Gewichtsteile) bei 25°C und einer Konzentration von 0,5 g/dl.

Komponente C)4)

Styrol/Acrylnitril-Copolymerisat mit einem Styrol/Acrylnitril-Verhältnis von 72:28 und einer Grenzviskosität von $[\eta]$ = 0,55 dl/g (Messung in Dimethylformamid bei 20°C).

Komponente D)

Pfropfpolymerisat von 50 Gew.-Teilen eines Copolymerisats aus Styrol und Acrylnitril im Verhältnis 72:28 auf 50 Gew.-Teile teilchenförmigen Polybutadienkautschuk (mittlerer Teilchendurchmesser $d_{50}$ = 0,4 μm), hergestellt durch Emulsionspolymerisation.

Komponente E) in Kombination mit Komponente D)

Tetrafluorethylenpolymerisat als koagulierte Mischung aus einer SAN-Pfropfpolymerisat-Emulsion gemäß D) in Wasser und einer Tetrafluorethylenpolymerisat-Emulsion in Wasser. Das Gewichtsverhältnis Pfropfpolymerisat D) zum Tetrafluorethylenpolymerisat E) in der Mischung ist 90 Gew.-% zu 10 Gew.-%. Die Tetrafluorethylenpolymerisat-Emulsion besitzt einen Feststoffgehalt von 60 Gew.-%, die Teilchengröße liegt zwischen 0,05 und 0,5 μm. Die SAN-Pfropfpolymerisat-Emulsion besitzt einen Feststoffgehalt von 34 Gew.-% und eine mittlere Latexteilchengröße von 0,4 μm.

Herstellung von E) + D)

Die Emulsion des Tetrafluorethylenpolymerisats wurde mit der Emulsion des SAN-Pfropfpolymerisats D) vermischt und mit 1,8 Gew.-%, bezogen auf Polymerfeststoff, phenolischer Antioxidantien stabilisiert. Bei 85 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

2. Herstellung und Prüfung der erfindungsgemäßen Formmassen

Die Komponenten A), B), C) und E) (als Cofällung mit D)) wurden auf einem 1,3 l Innenkneter bei Temperaturen zwischen 250 und 300°C aufgeschmolzen und homogenisiert.

Von den Formmassen wurden auf einer Spritzgußmaschine Stäbe der Abmessung 80 x 10 x 4 mm (Verarbeitungstemperatur: 280°C) hergestellt, an denen die Bestimmung der Wärmeformbeständigkeit nach Vicat B gemäß DIN 53 460 erfolgte.

Das Brandverhalten der Proben wurde nach UL-Subj. 94 v an Stäben der Abmessung 127 x 12,7 x 1,6 mm gemessen, hergestellt auf einer Spritzgußmaschine bei 280°C.

Der UL 94 V-Test wird wie folgt durchgeführt:

Substanzproben werden zu Stäben der Abmessungen 127 x 12,7 x 1,6 mm geformt. Die Stäbe werden vertikal so montiert, daß die Unterseite des Probekörpers sich 305 mm über einen Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 10 mm (3,8 inch) hohen blauen Flamme von Erdgas mit einer Wärmeeinheit von 3,73 x $10^4$ kJ/$m^3$ (1000 BUT per cubic foot) benutzt.

Die UL 94 V-O-Klassifizierung umfaßt die nachstehend beschriebenen Eigenschaften von Materialien, die gemäß der UL 94 V-Vorschrift geprüft wurden. Die Formmassen in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probesatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierungen bezeichnen Proben, die weniger flammwidrig oder weniger selbstverlöschend sind, weil sie flammende Tropfen oder Teilchen abgeben. Diese Klassifizierungen werden mit UL 94 V-1 und V-2 bezeichnet. N.B. heißt "nicht bestanden" und ist die Klassifizierung von Proben, die eine Nachbrennzeit von $\geqq$ 30 s aufweisen.

Eine Zusammenstellung der Eigenschaften der erfindungsgemäßen Formmassen findet sich in nachfolgender Tabelle.

<u>Tabelle</u>

Zusammensetzung und Eigenschaften der Formmassen

| Bsp. | Komponenten [Gew.-Teile] | | | | | | UL 94 V 1,6 mm[1)] | Vicat VST/$B_{120}$ [°C] |
|---|---|---|---|---|---|---|---|---|
| | A | B | C.1 | C.3 | C.4 | D+E | | |
| 1 | 100 | 10 | | | | | V 2 | 146 |
| 2 | 50 | 5 | 50 | | | 3 | V 0 | 144 |
| 3 | 50 | 2,5 | 50 | | | 3 | V 1 | 156 |
| 4 | 90 | 10 | | 10 | | 3 | V 2 | 136 |
| 5 | 90 | 10 | | | 10 | 3 | V 2 | 136 |

1) Konditionierung der Prüfkörper 48 h bei 23°C und 50 % relativer Luftfeuchtigkeit

**Patentansprüche**

1. Mischungen enthaltend A) 5 bis 99,5 Gewichtsteile an thermoplastischen, aromatischen Polycarbonaten mit $\overline{M}_w$ (Gewichtsmittelmolekulargewichten) von mindestens 10.000, die bifunktionelle Carbonatstruktureinheiten der Formel (Ia)

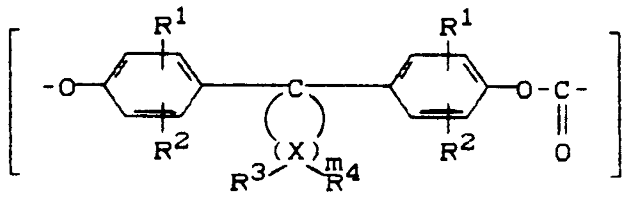

(Ia),

worin
$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,
m eine ganze Zahl von 4 bis 7,
$R^3$ und $R^4$, für jedes X individuell wählbar, unabhängig voneinander Wasserstoff oder $C_1$-$C_6$-Alkyl und
X Kohlenstoff bedeuten,
mit der Maßgabe, daß an mindestens einem Atom X <u>beide</u> Substituenten $R^3$ und $R^4$ Alkylgruppen sind,
in Mengen von 100 Mol-% bis 2 Mol-%, bezogen jeweils auf die Gesamtmenge von 100 Mol-% an difunktionellen Carbonatstruktureinheiten im Polycarbonat, enthalten, und
B) 0,5 bis 95 Gewichtsteile, bezogen jeweils auf 100 Gewichtsteile aus A) + B), an Phosphorverbindungen mit Ausnahme von Salzen der Phosphonsäure und Salzen der Phosphorsäure.

2. Mischungen gemäß Anspruch 1, dadurch gekennzeichnet, daß die Phosphorverbindungen gemäß Komponente B) der Formel (IX)

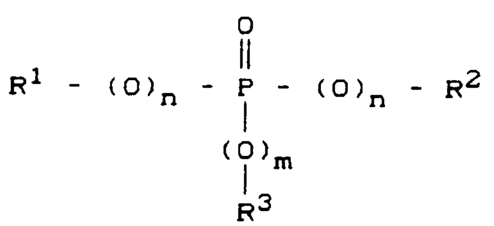

(IX),

entsprechen, worin
$R^1$, $R^2$ und $R^3$ unabhängig voneinander ein gegebenenfalls halogeniertes $C_1$-$C_8$-Alkyl oder ein gegebenenfalls halogeniertes und/oder alkyliertes $C_5$- oder $C_6$-Cycloalkyl oder ein gegebenenfalls halogeniertes und/oder alky liertes und/oder aralkyliertes $C_6$-$C_{30}$-Aryl, und "n" und "m" unabhängig voneinander 0 oder 1 sind.

3. Mischungen gemäß Ansprüche 1 und 2, dadurch gekennzeichnet, daß 1 Gew.-% bis 90 Gew.-% der Polycarbonatkomponente A) durch andere Thermoplasten C) mit einer Glasübergangstemperatur von > 10°C ersetzt sind.

4. Mischungen gemäß Ansprüche 1 und 2, dadurch gekennzeichnet, daß 1 Gew.-% bis 50 Gew.-% der Polycarbonatkomponente A) durch Pfropfpolymerisate D), welche durch Pfropfung von ethylenisch ungesättigten Monomeren D)1) auf Kautschukgrundlagen D)2) mit einer Glasübergangstemperatur von kleiner -10°C erhältlich sind, ersetzt sind.

5. Mischungen gemäß Ansprüche 1 und 2, dadurch gekennzeichnet, daß 1 Gew.-% bis 90 Gew.-% der Polycarbonatkomponente A) durch andere Thermoplasten gemäß Komponente C) des Anspruchs 3 ersetzt sind, und daß 1 Gew.-% bis 50 Gew.-%, bezogen auf 100 Gew.-% der Summe aus A) und C), durch Pfropfpolymerisate gemäß Komponente D) des Anspruchs 4 ersetzt sind.

6. Mischungen gemäß Ansprüche 1 bis 5, dadurch gekennzeichnet, daß sie zusätzlich fluorierte Polyolefine E) in Mengen von 0,05 bis 15 Gew.-Teilen, bezogen jeweils auf 100 Gew.-Teile der Mischungen der Ansprüche 1, 2, 3, 4 oder 5, enthalten, wobei die fluorierten Polyolefine einen mittleren Teilchendurchmesser $d_{50}$ von

0,05 µm bis 1.000 µm und eine Dichte von 1,2 g/cm³ bis 2,3 g/cm³ haben.

7. Mischungen gemäß Anspruch 6, dadurch gekennzeichnet, daß sie zusätzlich organische Chlorverbindungen oder organische Bromverbindungen als Komponente F) in Mengen von 1 Gew.-Teil bis 50 Gew.-Teile, bezogen jedoch auf 100 Gew.-Teile der Mischungen der Ansprüche 1, 2, 3, 4 oder 5, enthalten.

8. Mischungen gemäß Ansprüche 1 bis 7, dadurch gekennzeichnet, daß sie zusätzlich mindestens ein Additiv ausgewählt aus Stabilisatoren, Pigmenten, Fließmitteln, Entformungsmitteln, Füllstoffen, Verstärkungsstoffen und Antistatika enthalten.

9. Verfahren zur Herstellung der Mischungen der Ansprüche 1 bis 8, dadurch gekennzeichnet, daß man die jeweiligen Komponenten nacheinander oder gleichzeitig in bekannter Weise vermischt und anschließend bei erhöhten Temperaturen in üblichen Vorrichtungen schmelzcompoundiert oder schmelzextrudiert.

10. Verwendung der Mischungen der Ansprüche 1 bis 8 zur Herstellung von Formkörpern.

## Claims

1. Blends containing

A) 5 to 99.5 parts by weight thermoplastic aromatic polycarbonates having $\overline{M}_w$ values (weight average molecular weights) of at least 10,000 and containing bifunctional carbonate structural units corresponding to formula (Ia)

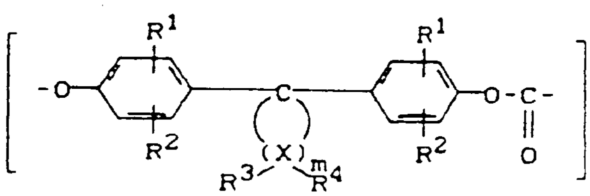

(Ia),

in which

$R^1$ and $R^2$ independently of one another represent hydrogen, halogen, $C_{1-8}$ alkyl, $C_{5-6}$ cycloalkyl, $C_{6-10}$ aryl and $C_{7-12}$ aralkyl,

m is an integer of 4 to 7,

$R^3$ and $R^4$ may be individually selected for each X and, independently of one another, represent hydrogen or $C_{1-6}$ alkyl

and

X is carbon,

with the proviso that, at at least one atom X, both substituents $R^3$ and $R^4$ are alkyl groups, in quantities of 100 mol-% to 2 mol-%, based on the total quantity of 100 mol-% of difunctional carbonate structural units in the polycarbonate, and

B) 0.5 to 95 parts by weight, based on 100 parts by weight of A) + B), of phosphorus compounds except for salts of phosphonic acid and salts of phosphoric acid.

2. Blends as claimed in claim 1, characterized in that the phosphorus compounds of component B) correspond to formula (IX)

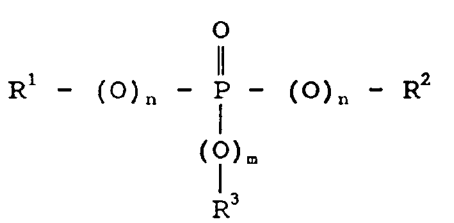

(IX)

in which

$R^1$, $R^2$ and $R^3$ independently of one another represent an optionally halogenated $C_{1-8}$ alkyl or an optionally halogenated and/or alkylated $C_5$ or $C_6$ cycloalkyl or an optionally halogenated and/or alkylated and/or aralkylated $C_{6-30}$ aryl and

n and m independently of one another have the value 0 or 1.

3. Blends as claimed in claims 1 and 2, characterized in that 1% by weight to 90% by weight of the polycarbonate component A) is replaced by other thermoplastics C) having a glass transition temperature of >10°C.

4. Blends as claimed in claims 1 and 2, characterized in that 1% by weight to 50% by weight of the polycarbonate component A) is replaced by graft polymers D) obtainable by grafting of ethylenically unsaturated monomers D)1) onto rubber bases D)2) having a glass transition temperature below -10°C.

5. Blends as claimed in claim 1 and 2, characterized in that % by weight to 90% by weight of the polycarbonate component A) is replaced by other thermoplastics of component C) in claim 3 and in that 1% by weight to 50% by weight, based on 100% by weight of the sum of A) and C), is replaced by graft polymers of component D) in claim 4.

6. Blends as claimed in claims 1 to,5, characterized in that they additionally contain fluorinated polyolefins E) in quantities of 0.05 to 15 parts by weight, based on 100 parts by weight of the blends of claims 1, 2, 3, 4 or 5, the fluorinated polyolefins having an average particle diameter $d_{50}$ of 0.05 μm to 1,000 μm and a density of 1.2 g/cm³ to 2.3 g/cm³.

7. Blends as claimed in claim 6, characterized in that they additionally contain organic chlorine compounds or organic bromine compounds as component F) in quantities of 1 part by weight to 50 parts by weight, but based on 100 parts by weight of the blends of claims 1, 2, 3, 4 or 5.

8. Blends as claimed in claims 1 to 7, characterized in that they additionally contain at least one additive selected from stabilizers, pigments, flow aids, mould release agents, fillers, reinforcing materials and antistatic agents.

9. A process for the production of the blends claimed in claims 1 to 8, characterized in that the respective components are mixed successively or simultaneously in known manner and the resulting mixture is subsequently melt-compounded or melt-extruded at elevated temperatures in standard units.

10. The use of the blends claimed in claims 1 to 8 for the production of mouldings.

**Revendications**

1. Mélanges contenant

A) 5 à 99,5% parties en poids de polycarbonates aromatiques thermoplastiques ayant des valeurs $M_p$ (moyennes pondérales des poids moléculaires) d'au moins 10 000, qui contiennent des motifs structuraux carbonate bifonctionnels de formule (Ia)

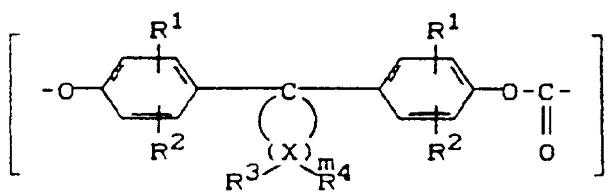

(Ia),

dans laquelle ,

$R^1$ et $R^2$ représentent indépendamment l'un de l'autre l'hydrogène, un halogène, un groupe alkyle en $C_1$ à $C_8$, cycloalkyle en $C_5$ ou $C_6$, aryle en $C_6$ à $C_{10}$ et aralkyle en $C_7$ à $C_{12}$,

m est un nombre entier de 4 à 7,

$R^3$ et $R^4$, pouvant être choisis individuellement pour chaque X, représentent indépendamment l'un de l'autre l'hydrogène ou un groupe alkyle en $C_1$ à $C_6$

et

X est le carbone,

sous réserve que sur au moins un atome X, les deux substituants $R^3$ et $R^4$ soient des groupes alkyle en quantités de 100 moles % à 2 moles %, par rapport dans chaque cas à la quantité totale de 100 moles % de motifs structuraux carbonate bifonctionnels présents dans le polycarbonate, et

B) 0,5 à 95 parties en poids, dans chaque cas par rapport à 100 parties en poids de A) + B), de composés phosphorés à l'exception de sels d'acide phosphonique et de sels d'acide phosphorique.

2. Mélanges suivant la revendication 1, caractérisés en ce que les composés phosphorés correspondant au composant B) répondent à la formule (IX)

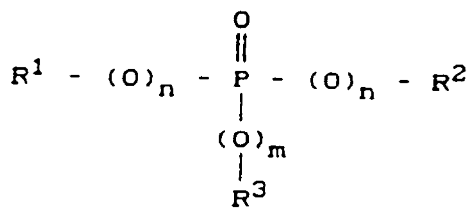 (IX),

dans laquelle
$R^1$, $R^2$ et $R^3$ représentent indépendammment les uns des autres un groupe alkyle en $C_1$ à $C_8$ éventuellement halogéné ou un groupe cycloalkyle en $C_5$ ou $C_6$ éventuellement halogéné et/ou alkylé ou un groupe aryle en $C_6$ à $C_{30}$ éventuellement halogéné et/ou alkylé et/ou aralkylé
et "n" et "m" ont indépendamment l'un de l'autre la valeur 0 ou 1.

3. Mélanges suivant les revendications 1 et 2, caractérisés en ce que 1 à 90% en poids du composant polycarbonate A) sont remplacés par d'autres composants thermoplastiques C) ayant une température de transition vitreuse supérieure à 10°C.

4. Mélanges suivant les revendications 1 et 2, caractérisés en ce que 1 à 50% en poids du composant polycarbonate A) sont remplacés par des polymérisats greffés D) qui sont obtenus par greffage de monomères D)1) à non-saturation éthylénique sur des substrats de caoutchouc D)2) ayant une température de transition vitreuse inférieure à -10°C.

5. Mélanges suivant les revendications 1 et 2, caractérisés en ce que 1 à 90% en poids du composant polycarbonate A) sont remplacés par d'autres matières thermoplastiques correspondant au composant C) de la revendication 3, et en ce que 1 à 50% en poids, par rapport à 100% en poids de la somme de A) et C), sont remplacés par des polymérisats greffés correspondant au composant D) de la revendication 4.

6. Mélanges suivant les revendications 1 à 5, caractérisés en ce qu'ils contiennent en outre des polyoléfines fluorées E) en quantités de 0,05 à 15 parties en poids, dans chaque cas par rapport à 100 parties en poids des mélanges des revendications 1, 2, 3, 4 ou 5, les polyoléfines fluorées ayant un diamètre moyen $d_{50}$ de particules de 0,05 $\mu$m à 1000 $\mu$m et une masse volumique de 1,2 $g/cm^3$ à 2,3 $g/cm^3$.

7. Mélanges suivant la revendication 6, caractérisés en ce qu'ils contiennent en outre des composés organiques chlorés ou des composés organiques bromés comme composant F) en quantités de 1 à 50 parties en poids, par rapport toutefois à 100 parties en poids des mélanges des revendications 1, 2, 3, 4 ou 5.

8. Mélanges suivant les revendications 1 à 7, caractérisés en ce qu'ils contiennent en outre au moins un additif choisi entre des agents stabilisants, des pigments, des agents favorisant l'écoulement, des agents de démoulage, des charges, des substances de renforcement et des agents antistatiques.

9. Procédé de préparation des mélanges suivant les revendications 1 à 8, caractérisé en ce qu'on mélange les différents composants successivement ou simultanément d'une manière connue puis on les formule à l'état fondu ou on les extrude à l'état fondu à des températures élevées dans des dispositifs classiques.

10. Utilisation des mélanges des revendications 1 à 8 pour la production de pièces moulées.